# EUROPEAN PATENT SPECIFICATION

(11) **EP 4 499 738 B1**
(45) Date of publication and mention of the grant of the patent: **30.09.2026**
(21) Application number: 23715767.2
(22) Date of filing: 21.03.2023
(51) Int. Cl.: C08J 5/22, B01D 61/44, B01J 39/20, B01J 41/14, B01D 69/02, B01D 69/12, B01J 47/12

(54) **BIPOLAR MEMBRANES**
BIPOLARE MEMBRANEN
MEMBRANES BIPOLAIRES

(30) Priority: 31.03.2022 GB 202204633
(43) Date of publication of application: 05.02.2025
(73) Proprietor: Fujifilm Manufacturing Europe BV, 5047 TK Tilburg (NL); FUJIFILM Corporation, Tokyo 106-8620 (JP)
(72) Inventor: HUERTA MARTINEZ, Elisa, 5047 TK Tilburg (NL); HESSING, Jacko, 5047 TK Tilburg (NL)
(74) Representative: Kraus & Lederer PartGmbB
(86) International application number: PCT/EP2023/057187
(87) International publication number: WO 2023/186622

(56) References cited:
- WO-A1-2022/049193
- US-A- 5 401 408

## Description

This invention relates to bipolar membranes and to processes for their preparation and use.

Ion exchange membranes of various types are known, including cation exchange membranes, anion exchange and bipolar membranes. Cation exchange membranes and anion exchange are generally categorized as such depending on their predominant charge. Cation exchange membranes comprise negatively charged groups that allow the passage of cations but reject anions, while anion exchange membranes comprise positively charged groups that allow the passage of anions but reject cations. Bipolar membranes (BPMs) have both a cationic layer (sometimes called an anion exchange layer or "AEL") and an anionic layer (sometimes called a cation exchange layer or "CEL"). Some BPMs further comprise an intermediate layer between the AEL and the CEL.

For example,WO2022/049193A1 discloses a composite bipolar membrane.

Some ion exchange membranes comprise a porous support which provides mechanical strength. Such membranes are often called "composite membranes" due to the presence of both an ionically charged polymer which discriminates between oppositely charged ions and the porous support which provides mechanical strength.

An objective of the present invention is to provide BPMs which have good permselectivity and which can be used to produce acids and bases of high purity.

The invention is as defined in the appended claims.

According to a first aspect of the present invention there is provided a bipolar membrane (BPM) comprising an anion exchange layer (AEL) and a cation exchange layer (CEL), wherein the cation exchange layer is obtainable by curing a curable composition comprising:
(a1) a first crosslinking agent comprising an anionic group and at least two polymerisable groups;
(b1) a second crosslinking agent comprising at least 5 vinyl groups and being free from ionic groups;
(c1) a third crosslinking agent comprising 2, 3 or 4 polymerisable groups and being free from ionic groups.

The curable composition for the preparation of the CEL is hereinafter referred to as the first curable composition.

In this document (including its claims), the verb "comprise" and its conjugations is used in its non-limiting sense to mean that items following the word are included, but items not specifically mentioned are not excluded. In addition, reference to an element by the indefinite article "a" or "an" does not exclude the possibility that more than one of the elements is present, unless the context clearly requires that there be one and only one of the elements. The indefinite article "a" or "an" thus usually mean "at least one".

### BRIEF DESCRIPTION OF THE DRAWINGS:

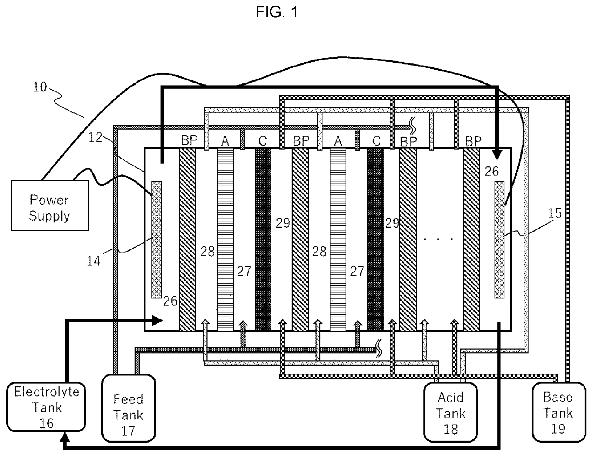

FIG. 1 illustrates schematically a bipolar electrodialysis device (BE device) according to the present invention.

FIG. 1 illustrates a bipolar electrodialysis device (10) comprising a bipolar electrodialysis enclosure (12), an anode (14) provided inside the bipolar electrodialysis enclosure (12) and a cathode (15) provided on the side opposite to the anode (14). The device comprises five cation exchange membranes (C) and five anion exchange membranes (A) (only 2 of each are shown) and six bipolar membranes (BP) according to the present invention (only 4 are shown) provided alternately between the anode (14) and the cathode (15). A feed tank (17) is connected to the channels (27) between (A) and (C). An acid tank (18) is connected to the channels (28) between (BP) and (A). A base tank (19) is connected to the channels (29) between (BP) and (C). An electrolyte tank (16) is connected to the channels (26) between (BP)s and electrodes (14, 15).

Component (a1) may contain one first crosslinking agent or more than one first crosslinking agent, e.g. 2, 3 or 4 first crosslinking agents, each comprising an anionic group and at least two polymerisable groups.

The first crosslinking agent preferably comprises a bissulphonylimide group (-SO₂-N⁻-SO₂-) as anionic group and at least two polymerisable groups. The first crosslinking agent preferably further comprises at least one aromatic group, preferably a C₆-C₁₀-aryl group. More preferably the at least one aromatic group is a phenyl group.

The polymerisable groups present in the first crosslinking agent (component (a1)) are preferably each independently selected from ethylenically unsaturated groups and thiol groups (e.g. alkylenethiol, preferably -C1-3-SH).

Preferred polymerisable groups comprise ethylenically unsaturated groups and thiol groups (e.g. alkylenethiol, preferably -C₁₋₃-SH). Optionally the polymerisable groups further comprise an optionally substituted alkylene group (e.g. optionally substituted C₁₋₆-alkylene) and/or an optionally substituted arylene group (e.g. optionally substituted C₆₋₁₈-arylene). The preferred substituents, when present, include C₁₋₄-alkyl, C₁₋₄-alkoxy, sulpho, carboxy, and hydroxyl groups.

Preferred ethylenically unsaturated groups include vinyl groups, (meth)acrylic groups (e.g. CH₂=CR¹-C(O)- groups), especially (meth)acrylate groups (e.g. CH₂=CR¹-C(O)O-groups) and (meth)acrylamide groups (e.g. CH₂=CR¹-C(O)NR¹- groups), wherein each R¹ independently is H or CH₃). Most preferred ethylenically unsaturated groups comprise or are vinyl groups (CH₂=CH- groups).

Preferably components (a1), (b1) and (c1) can be polymerised by exposure to actinic radiation, thermally and/or by electron beam initiation. Thermal curing may be achieved e.g. by placing the bipolar membrane in an oven or by applying infrared radiation. When component (a1) or (c1) comprises an ethylenically unsaturated group (e.g. a vinyl group), such group is preferably attached to an aromatic carbon atom such as a benzene ring, e.g. as in divinylbenzene. When component (a1) or (c1) comprises a thiol group such group is preferably attached to a non-aromatic carbon atom.

Preferably the first crosslinking agent is free from fluoro groups. Fluoro groups are F atoms covalently bound to a carbon atom. Fluoro groups are not preferred because crosslinking agents having fluoro groups are less soluble in aqueous liquids and because of the environmental issue generally associated with fluorinated compounds.

Preferably the first crosslinking agent is free from chloro groups. Chloro groups are Cl atoms covalently bound to a carbon atom.

The first crosslinking agent preferably comprises a group of Formula (I) 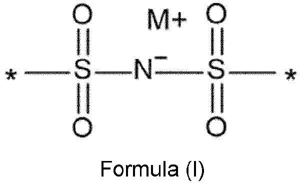 wherein M⁺ is a cation and * indicates the attachment points to other elements of the crosslinking agent.

M⁺ is preferably an ammonium cation or an alkali metal cation, especially Li⁺. When M⁺ is Li⁺ the resultant components have particularly good solubility in water and aqueous liquids.

Component (a1) is preferably of the Formula (la): 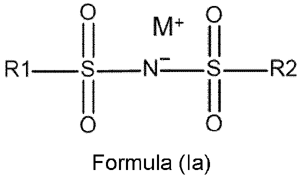 wherein at least one of R1 and R2, comprises one or more polymerisable groups, provided that the compound of Formula (la) comprises at least two polymerisable groups.

R1 and/or R2 may comprise non-polymerisable groups.

Preferred non-polymerisable groups include amino, alkyl (especially C₁₋₄-alkyl) and aryl (especially phenyl or naphthyl), each of which is unsubstituted or carries one or more non-polymerisable substituents, e.g. C₁₋₄-alkyl, C₁₋₄-alkoxy, amino, C₁₋₄-alkyamine, sulpho, carboxy, or hydroxyl group.

Preferably the first crosslinking agent is of Formula (II): 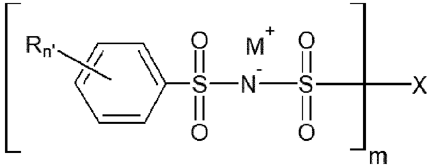 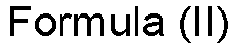 wherein:
- n': has a value of 1 or 2;
- m: has a value of 1 or 2;
- M⁺: is as hereinbefore defined;
- each R: is independently a polymerisable or non-polymerisable group; and
- X: is an optionally substituted amine group, an optionally substituted alkylene group (e.g. optionally substituted C₁-₆-alkylene) or an optionally substituted arylene group (e.g. optionally substituted C₆-₁₈-arylene)⁻,
provided that the compound of Formula (II) comprises at least two polymerisable groups (and is preferably free from fluoro groups).

Preferably R or each R independently is a vinyl group, a (C₁₋₃-alkylene)thiol group, an amino group, an alkyl group (especially C₁₋₄-alkyl) or an aryl group (especially phenyl or naphthyl).

For example, when m=1 and X is amino, R is a polymerisable group and n' is 2. Preferably R is a vinyl group or a (C₁₋₃-alkylene)thiol group.

Thus R may be a vinyl group, an optionally substituted thiol group or non-polymerisable group (as defined above).

The preferred substituents in X, when present, include C₁₋₄-alkyl, C₁₋₄-alkoxy, sulpho, carboxy, and hydroxyl groups.

In a preferred embodiment the compound of Formula (II) comprises 2, 3 or 4 polymerisable groups and especially 2 (and only 2) polymerisable groups.

In a preferred embodiment, the first crosslinking agent is of Formula (II) wherein m and n' both have a value of 1, X is a phenylene group carrying a vinyl group or a (C₁₋₃-alkylene)thiol group and R is a polymerisable group, preferably a vinyl group or a (C₁₋₃-alkylene)thiol group, and M⁺ is a cation.

In another preferred embodiment, the first crosslinking agent is of Formula (II) wherein m has a value of 2, n' has a value of 1 or 2, X is a C₁-₆-alkylene, or C₆-₁₈-arylene group or X is a group of the formula NR" wherein each R" independently is H or C₁-₄ alkyl and R and M⁺ are as hereinbefore defined.

In a preferred embodiment, the first crosslinking agent is of Formula (II) wherein m has a value of 1, n' has a value of 2, X is a C₁-₆-alkyl, or C₆-₁₈-aryl group or a group of the formula N(R")₂ wherein each R" independently is H or C₁-₄-alkyl and R is a polymerisable group, preferably a vinyl group or a (C₁₋₃-alkylene)thiol group, and M⁺ is a cation.

An illustrative synthesis method for the first crosslinking agent can be found below in the examples section below. Furthermore, many of the compounds of the first crosslinking agent may be prepared by a process comprising the steps of:
(i) providing a sulphonyl halide (e.g. chloride, bromide or fluoride) compound;
(ii) reacting the sulphonyl halide group of component (i) with a compound comprising a sulphonamide group to obtain component (a1) (e.g. of Formula (la) or (II));
wherein at least one of component (i) and component (ii) comprises at least one polymerisable group or a precursor thereof, preferably a vinyl group or thiol group. Preferably either component (i) or component (ii) comprises an aryl group, e.g. a phenylene group. For instance, component (i) may be a benzenesulphonyl chloride and component (ii) a sulphonamide,

In the illustrative synthesis method described above typically the vinyl group or (C₁₋₃-alkylene) thiol group is attached to a benzene ring of component (i) and/or (if present) of component (ii). In a preferred embodiment the sulphonyl halide compound used in the process comprises one or more vinyl groups, more preferably one or two vinyl groups, e.g. vinylbenzenesulphonyl halide or divinylbenzenesulphonyl halide.

The curable composition for preparing the CEL preferably comprises 35 to 70wt%, more preferably 40 to 65wt% of the first crosslinking agent(s), especially 45 to 62wt%.

Examples of first crosslinking agents which may be used as component (a1) (either alone or in combination) include compounds of the following formulae:

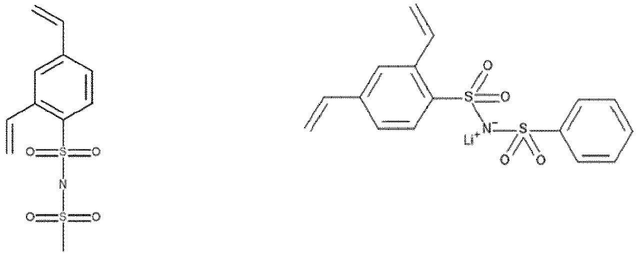

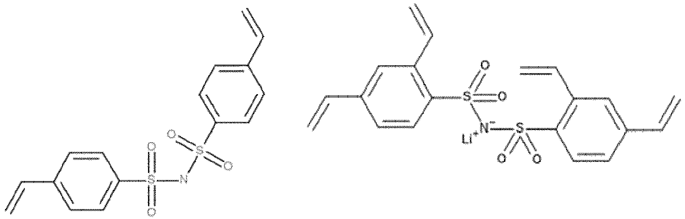

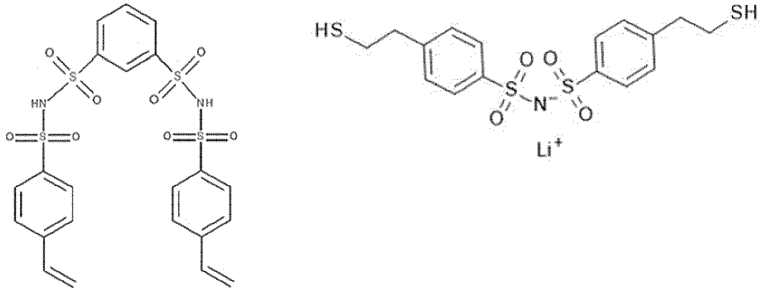

Component (b1) may contain one second crosslinking agent or more than one second crosslinking agent, e.g. 2, 3 or 4 second crosslinking agents, each comprising at least 5 vinyl groups and being free from ionic groups.

Preferably the second crosslinking agent is a curable compound of Formula (III):

R'-Aₙ-Bₘ-C_{q}-R' Formula (III)

wherein:
- A: is [CH₂CH=CHCH₂];
- B: is [CH₂CH(CH=CH₂)];
- C: is [CH₂CH(C₆H₅)];
- n: has a value of from 5 to 80% of the sum of (n+m+q);
- m: has a value of from 20 to 95% of the sum of (n+m+q);
- q: has a value of from 0 to 30% of the sum of (n+m+q); and each R' independently is H or OH;
provided that the curable compound of Formula (III) comprises at least 5 vinyl groups and is free from ionic groups.

In Formula (III) groups represented by A are each independently in the cis or the trans configuration.

Preferably the compound of Formula (III) is a random, linear copolymer. The groups shown in brackets in Formula (III) (i.e. [CH₂CH=CHCH₂]ₙ, [CH₂CH(CH=CH₂)]ₘ and [CH₂CH(C₆H₅)]_{q}) are preferably distributed randomly in Formula (III). Thus the groups shown in brackets in Formula (III) are preferably not in the form of continuous blocks and the compound of Formula (III) is preferably not a diblock or triblock copolymer.

Groups A and B in Formula (III) represent butadiene groups, i.e. component (b1) may be obtained by a process comprising polymerisation of a composition comprising butadiene monomers (and optionally styrene monomers, the latter being represented by group C in Formula (III)).

Preferably the second crosslinking agent comprises at least 8 vinyl groups derived from butadiene groups, more preferably at least 10 vinyl groups derived from butadiene groups.

The second crosslinking agent is free from ionic groups, e.g. free from bissulphonylimide, sulphonic acid and sulphonate groups.

The values of n, m and q define the proportion, numerically, of each of the groups A, B and C respectively in the compound of Formula (III) relative to the total amount of the groups A, B and C (i.e. n+m+q)) in the compound of Formula (III).

Preferably n has a value corresponding to 5% to 80%, more preferably 10% to 75% and especially 15% to 72% of the sum of (n+m+q).

Preferably m has a value corresponding to 20% to 95%, more preferably 25% to 90% and especially 28% to 85% of the sum of (n+m+q).

Preferably q has a value corresponding to 0 to 25% of the sum of (n+m+q).

The values of n, m and q are therefore numbers and herein they are expressed as a % relative to the total number of (n+m+q) groups. In each molecule of Formula (III) n, m and q are integers, although typically the second crosslinking agent comprises a mixture of compounds of Formula (III) and so the average value of n, m and q for the second crosslinking agent as a whole will typically not be an integer.

Preferably the absolute value of (n+m+q) is 6 to 270, more preferably 10 to 145, especially 19 to 130.

The absolute value of m is preferably 5 to 75, more preferably 6 to 70, especially 8 to 60.

The absolute value of n is preferably 1 to 250, more preferably 2 to 170, especially 2 to 100.

The absolute value of q is preferably 0 to 80, more preferably 0 to 50, especially 0 to 40.

In a preferred embodiment, the second crosslinking agent is of the Formula (IV): 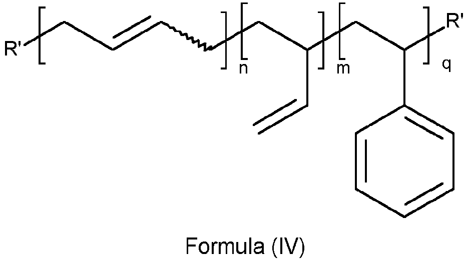 wherein n, m, q and each R' independently are as hereinbefore defined and preferred in relation to Formula (III).

Preferably the second crosslinking agent comprises at least 10 vinyl groups and more preferably at least 12 vinyl groups.

Preferably the second crosslinking agent comprises less than 75 vinyl groups, more preferably less than 70, especially less than 60 vinyl groups.

Optionally, the second crosslinking agent comprises styrene groups. Such styrene groups are preferably distributed randomly within the second crosslinking agent.

The second crosslinking agent preferably has a molecular weight (MW) of 1000 to 5000Da. The second crosslinking agent preferably has a melting point below 50°C, more preferably below 40°C, especially below 30°C, more especially below 15°C.

The second crosslinking agent preferably has a viscosity not higher than 60 Pa.s (600 Poise), more preferably less than 40 Pa.s (400 Poise), especially lower than 20 Pa.s (200 Poise), more especially below 10 Pa.s (100 Poise), when measured at 25°C by a suitable viscosity meter such as a Brookfield DV-II viscosity meter equipped with a SC4-18 conical spindle and operated at 60 rpm. When the second crosslinking agent has this preferred melting point and/or viscosity then manufacturing of the cation exchange layer is facilitated.

Preferably the composition comprises 1 to 15wt% of the second crosslinking agent, more preferably 2 to 10wt%.

Examples of the second crosslinking agent include polybutadiene polymers (especially through predominantly 1,2-addition), styrene-butadiene copolymers (especially through predominantly 1,2-addition) such polymers optionally carrying one or more (especially two) OH groups, provided that such polymers comprise at least 5 vinyl groups. Such materials can be obtained from commercial sources, e.g. from Cray Valley Technologies (e.g. under the names of Ricon^{®}, Krasol^{®}, Poly bd^{®}), Nippon Soda Co, Ltd (e.g. under the name of Nisso-PB^{™}).

Component (c1) may contain one third crosslinking agent or more than one third crosslinking agent, e.g. 2, 3 or 4 third crosslinking agents, each comprising 2, 3 or 4 polymerisable groups and being free from ionic groups.

As the third crosslinking agent is free from ionic groups, it does not comprise any carboxylic acid, bissulphonylimide, sulphonic acid and sulphonate groups.

In some embodiments the third crosslinking agent comprises an aromatic group, e.g. a phenylene, naphthylene or triazine group. In other embodiments the third crosslinking agent is free from aromatic groups.

In one embodiment the third crosslinking agent is of Formula (V):

R‴ₙ-A' Formula (V)

wherein:
- each R‴: independently comprises a polymerisable group or a non-polymerisable group;
- n: has a value of 2, 3 or 4; and
- A': is a linking group;
provided that the compound of Formula (V) comprises 2, 3 or 4 polymerisable groups and is free from ionic groups.

The polymerisable groups present in R‴ in Formula (V) include ethylenically unsaturated groups and thiol groups (e.g. alkylenethiol, preferably -C₁₋₃-SH). Preferred ethylenically unsaturated groups are as described above in relation to the first crosslinking agent.

The non-polymerisable groups in R‴ include amino, alkyl (especially C₁₋₄-alkyl) and aryl (especially phenyl or naphthyl), each of which is unsubstituted or carries one or more non-polymerisable substituents, e.g. C₁₋₄-alkyl, C₁₋₄-alkoxy, amino, C₁₋₄-alkyamine, sulpho, carboxy, or hydroxyl group.

Preferably in Formula (V) each R‴ is a vinyl group, an allyl group or a C₀₋₃-alkylenethiol group.

The third crosslinking agent may be obtained commercially or by methods known in the art.

Preferably the third crosslinking agent is free from fluoro and/or chloro groups.

In Formula (V) the group A' is preferably N (a nitrogen atom) or an optionally substituted alkylene group (e.g. optionally substituted C₁-₆-alkylene) or an optionally substituted arylene group (e.g. optionally substituted C₆-₁₈-arylene). The preferred substituents, when present, include C₁₋₄-alkyl, C₁₋₄-alkoxy and hydroxyl groups.

In a preferred embodiment, in Formula (V):
(i) each R‴ independently comprises a polymerisable group, n has a value of 2, 3 or 4 and A' is C₁₋₆-alkylene or C₆₋₁₈-arylene; or
(ii) A' is N, n has a value of 3 and either all three of the groups represented by R‴ comprise a polymerisable group or two of the groups represented by R‴ comprise a polymerisable group and the third group represented by R‴ is H or C₁₋₄ alkyl; or
(iii) A' is a triazine group or a cyanuric acid derivative, n has a value of 3 and either all three of the groups represented by R‴ comprise a polymerisable group or two of the groups represented by R‴ comprise a polymerisable group and the third group represented by R‴ is C₁₋₄ alkoxy or C₁₋₄ alkyl.

The third crosslinking agent preferably has a molecular weight below 500 Da, more preferably below 400 Da, especially below 300 Da, more especially below 260 Da. By keeping the molecular weight of the third crosslinking agent low the ion exchange capacity of the CEL of the present invention is not reduced significantly.

In a preferred embodiment the third crosslinking agent is a liquid at the temperature at which the CEL is prepared. Preferably the third crosslinking agent has a melting point below 80°C, more preferably below 50°C, especially below 30°C, more especially below 15°C.

Preferably the boiling point of the second crosslinking agent is at least 150°C, more preferably at least 190°C.

Preferably the vapour pressure of the second crosslinking agent is below 133.3 Pa (1 mmHg), more preferably below 93.3 Pa (0.7 mmHg) at 20°C or preferably below 135 Pa, more preferably below 100 Pa at 20°C.

Examples of the third crosslinking agents which may be used alone or in combination as component (c1) include the following compounds.

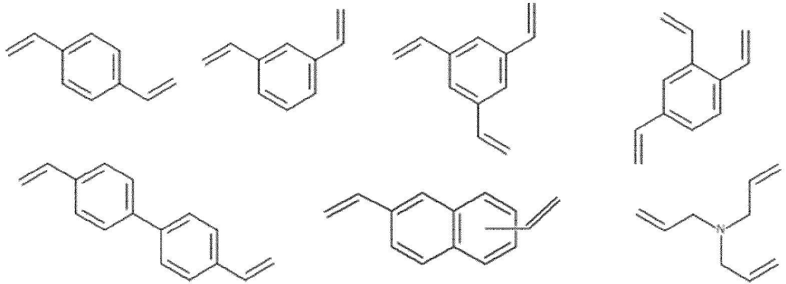

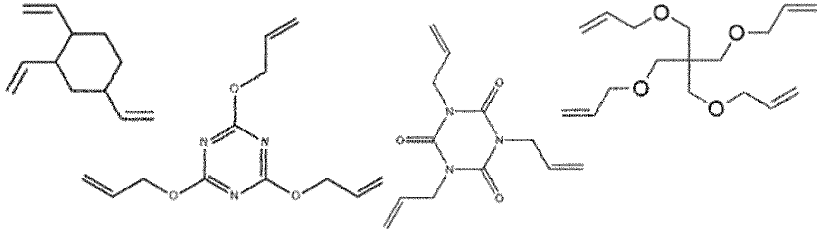

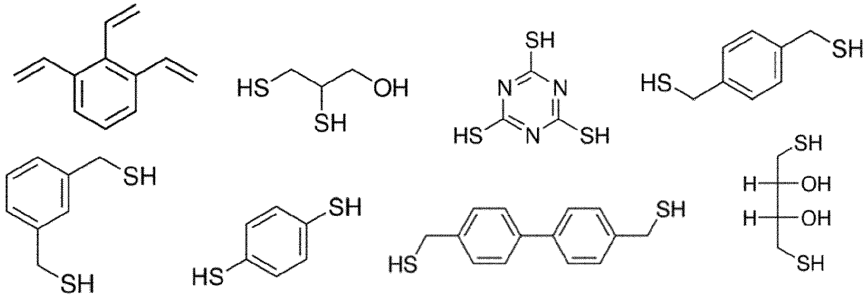

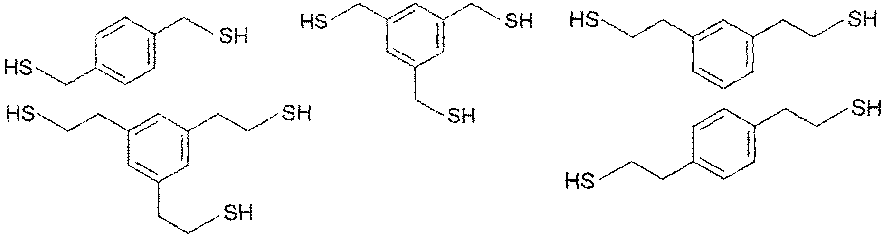

Preferably the polymerisable groups present in the first crosslinking agent(s) and/or the second crosslinking agent(s) are copolymerisable with the polymerisable groups present in the third crosslinking agent(s). For example:
- the polymerisable groups in the first, second and third crosslinking agents are each independently selected from ethylenically unsaturated groups (preferably vinyl groups);
- the polymerisable groups in one or two of the first, second and third crosslinking agents are thiol groups and the polymerisable groups in the other of the first, second and third crosslinking agents are groups which are reactive with thiol groups, e.g. ethylenically unsaturated groups (preferably vinyl groups).

Preferably the third crosslinking agent comprises divinylbenzene, 2,4,6-triallyloxy-1,3,5-triazine, 1,3,5-triallylisocyanurate, triallylamine, 1,2,4-trivinylcyclohexane, tetra(allyloxy)ethane, pentaerythritol tetraallyl ether, 2,3-dimercapto-1-propanol, dithioerythritol, trithiocyanuric acid, 1,3 or 1,4-benzenedimethanethiol or a combination thereof.

Preferably the composition comprises 2 to 20wt%, most preferably 5 to 15%wt% of the third crosslinking agent.

The composition for preparing the cation exchange layer of the present invention preferably comprises an amount of component (a1) in a weight ratio compared to the sum of the amounts of components (b1) and (c1) is in the range 3 to 25 (i.e. 3:1 to 25:1).

The molar ratio of component (a1) to the sum of the molar amounts of components (b1) and (c1) is preferably in the range 2 to 12 (i.e. 2:1 to 12:1).

The weight ratio of component (b1) to (c1) is preferably in the range 0.2 to 5 (i.e 1:5 to 5:1).

The molar ratio of component (b1) to (c1) is preferably in the range 0.01 to 0.5 (i.e. 1:100 to 1:2).

The cation exchange layer according to the first aspect of the present invention is preferably obtainable by curing a composition comprising:
(a1) component (a1) as defined above;
(b1) component (b1) as defined above;
(c1) component (c1) as defined above;
optionally (d1) a compound comprising one and only one polymerisable group;
optionally (e1) a radical initiator; and
optionally (f1) a solvent.

The abovementioned composition forms a second aspect of the present invention.

The preferred amounts of components (a1), (b1) and (c1) and the preferred ratios of (a1), (b1) and (c1) in the above composition and in the composition according to the second aspect of the invention are as described above in relation to the first aspect of the present invention.

Preferably the composition comprises 0 to 40 wt%, more preferably 5 to 30% wt%, most preferably 6 to 25 wt%, of component (d1).

Preferably the composition comprises 0 to 10 wt%, more preferably 0.001 to 5 wt%, most preferably 0.005 to 2 wt%, of component (e1).

Preferably the composition comprises 0 to 40 wt%, more preferably 10 to 40 wt%, most preferably 15 to 35 wt%, of component (f1).

Component (d1) may contain one compound comprising one and only one polymerisable group or more than one compound comprising one and only one polymerisable group. Preferably component (d1) comprises an anionic group.

The preferred polymerisable group which may be present in the compound(s) comprising one and only one polymerisable group is as defined above in relation to component (a1), especially a vinyl group, e.g. in the form of allylic or styrenic group. Styrenic groups are preferred over e.g. (meth)acrylic groups because the resultant BPMs have particularly good stability over a wide pH range.

Examples of compounds which comprise one and only one polymerisable group include the following compounds of Formula (MB-α), (AM-B) and Formula (VI): 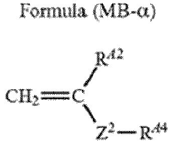 wherein in Formula (MB-α),
R^{A2} represents a hydrogen atom or an alkyl group,
R^{A4} represents an organic group comprising a sulpho group in free acid or salt form and having no ethylenically unsaturated group; and
Z² represents -(C=O)NRa-, wherein Ra represents a hydrogen atom or an alkyl group, preferably a hydrogen atom.
Examples of compounds of Formula (MB-α) include: 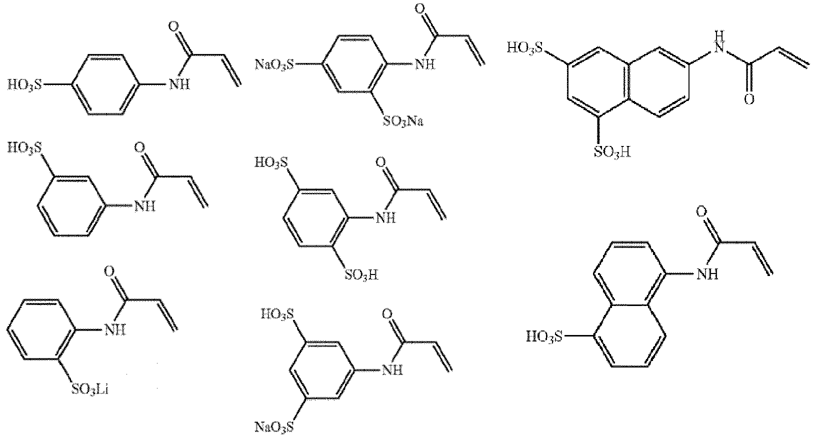 Synthesis methods for compounds of Formula (MB-α) can be found in e.g. US2015/0353696. 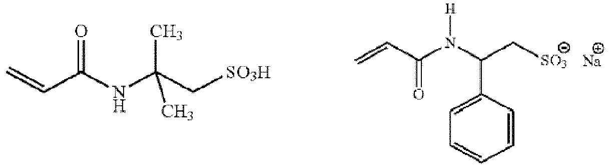 Synthesis methods for the above compounds can be found in e.g. US2016/0369017. 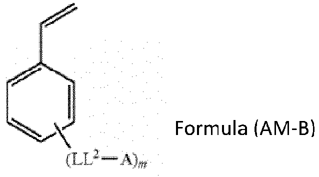 wherein in Formula (AM-B):
- LL²: represents a single bond or a bivalent linking group; and
- A: represents a sulpho group in free acid or salt form; and
- m: represents 1 or 2.
Examples of compounds of Formula (AM-B) include: 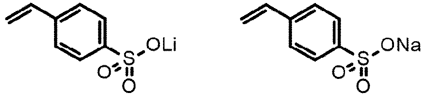 Such compounds of Formula (AM-B) are commercially available, e.g. from Tosoh Chemicals and Sigma-Aldrich. 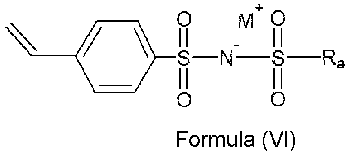 wherein
- Rₐ: in Formula (VI) is C₁₋₄ alkyl, NH₂, C₆-₁₂-aryl; and
- M⁺: is a cation, preferably H⁺, Li⁺, Na⁺, K⁺, NL₄⁺ wherein each L independently is H or C₁-₃-alkyl.

Examples of compounds of Formula (VI) include:

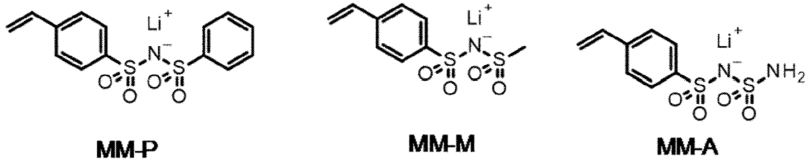

Synthesis methods for the above compounds having the MM prefix are known from literature.

Preferably component (d1) is chosen from the compounds of Formula (AM-B) and/or Formula (VI) because this can result in cation exchange membranes having especially good stability in the pH range 0 to 14.

Component (e1) may contain one radical initiator or more than one radical initiator.

Preferred radical initiators include thermal initiators and photoinitiators.

Examples of suitable thermal initiators which may be used as component (e1) include 2,2'-azobis(2-methylpropionitrile) (AlBN), 4,4'-azobis(4-cyanovaleric acid), 2,2'-azobis(2,4-dimethyl valeronitrile), 2,2'-azobis(2-methylbutyronitrile), 1,1'-azobis(cyclohexane-1-carbonitrile), 2,2'-azobis(4-methoxy-2,4-dimethyl valeronitrile), dimethyl 2,2'-azobis(2-methylpropionate), 2,2'-azobis[N-(2-propenyl)-2-methylpropionamide, 1-[(1-cyano-1-methylethyl)azo]formamide, 2,2'-Azobis(N-butyl-2-methylpropionamide), 2,2'-Azobis(N-cyclohexyl-2-methylpropionamide), 2,2'-Azobis(2-methylpropionamidine) dihydrochloride, 2,2'-Azobis[2-(2-imidazolin-2-yl)propane]dihydrochloride, 2,2'-Azobis[2-(2-imidazolin-2-yl)propane]disulphate dihydrate, 2,2'-Azobis[N-(2-carboxyethyl)-2-methylpropionamidine] hydrate, 2,2'-Azobis{2-[1-(2-hydroxyethyl)-2-imidazolin-2-yl]propane} dihydrochloride, 2,2'-Azobis[2-(2-imidazolin-2-yl)propane], 2,2'-Azobis(1-imino-1-pyrrolidino-2-ethylpropane) dihydrochloride, 2,2'-Azobis{2-methyl-N-[1,1-bis(hydroxymethyl)-2-hydroxyethl]propionamide} and 2,2'-Azobis[2-methyl-N-(2-hydroxyethyl)propionamide] and combinations of two or more thereof.

Examples of suitable photoinitiators which may be included in the composition as component (e1) include aromatic ketones, acylphosphine compounds, aromatic onium salt compounds, organic peroxides, thio compounds, hexa-arylbiimidazole compounds, ketoxime ester compounds, borate compounds, azinium compounds, metallocene compounds, active ester compounds, compounds having a carbon halogen bond, and an alkyl amine compounds. Preferred examples of the aromatic ketones, the acylphosphine oxide compound, and the thio-compound include compounds having a benzophenone skeleton or a thioxanthone skeleton described in "RADIATION CURING IN POLYMER SCIENCE AND TECHNOLOGY", pp.77-117 (1993) and combinations of two or more thereof. More preferred examples thereof include an alpha-thiobenzophenone compound described in JP1972-6416B (JP-S47-6416B), a benzoin ether compound described in JP1972-3981B (JP-S47-3981B), an alpha-substituted benzoin compound described in JP1972-22326B (JP-S47-22326B), a benzoin derivative described in JP1972-23664B (JP-S47-23664B), an aroylphosphonic acid ester described in JP1982-30704A (JP-S57-30704A), dialkoxybenzophenone described in JP1985-26483B (JP-S60-26483B), benzoin ethers described in JP1985-26403B (JP-S60-26403B) and JP1987-81345A (JPS62-81345A), alpha-amino benzophenones described in JP1989-34242B (JP H01-34242B), U.S. Pat. No. 4,318,791A, and EP0284561A1, p-di(dimethylaminobenzoyl) benzene described in JP1990-211452A (JP-H02- 211452A), a thio substituted aromatic ketone described in JP1986-194062A (JPS61-194062A), an acylphosphine sulphide described in JP1990-9597B (JP-H02- 9597B), an acylphosphine described in JP1990-9596B (JP-H02-9596B), thioxanthones described in JP1988-61950B (JP-S63-61950B), and coumarins described in JP1984-42864B (JP-S59-42864B). In addition, the photoinitiators described in JP2008-105379A and JP2009-114290A are also preferable. In addition, photoinitiators described in pp. 65 to 148 of "Ultraviolet Curing System" written by Kato Kiyomi (published by Research Center Co., Ltd., 1989) may be used.

Especially preferred photoinitiators include Norrish Type II photoinitiators having an absorption maximum at a wavelength longer than 380nm, when measured in one or more of the following solvents at a temperature of 23°C: water, ethanol and toluene. Examples include a xanthene, flavin, curcumin, porphyrin, anthraquinone, phenoxazine, camphorquinone, phenazine, acridine, phenothiazine, xanthone, thioxanthone, thioxanthene, acridone, flavone, coumarin, fluorenone, quinoline, quinolone, naphtaquinone, quinolinone, arylmethane, azo, benzophenone, carotenoid, cyanine, phtalocyanine, dipyrrin, squarine, stilbene, styryl, triazine or anthocyanin-derived photoinitiator and combinations of two or more thereof.

When the composition is cured by electron beam or gamma radiation component (e) is not needed.

Component (f1) may contain one solvent or, more typically, more than one solvent.

Preferably the solvent(s) used as component (f1) are inert solvents. In other words, preferably the solvent does not react with any of the other components of the composition. In one preferred embodiment component (f1) comprises water and optionally an organic solvent, especially where some or all of the organic solvent is water miscible. Water is useful for dissolving component (a1) and possibly also component (d1), while the organic solvent is useful for dissolving components (b1) and (c1) and any other organic components present in the composition.

Component (f1) is useful for reducing the viscosity and/or surface tension of the composition.

Examples of inert solvents which may be used as or in component (f1) include water, alcohol-based solvents, ether-based solvents, amide-based solvents, ketone-based solvents, sulphoxide-based solvents, sulphone-based solvents, nitrile-based solvents and organic phosphorus based solvents. Examples of alcohol-based solvents which may be used as or in component (f1) (especially in combination with water) include methanol, ethanol, isopropanol, n-butanol, diacetone alcohol, methoxypropanol, ethylene glycol, propylene glycol, diethylene glycol, dipropylene glycol and mixtures comprising two or more thereof. In addition, preferred inert, organic solvents which may be used in component (f1) include dimethyl sulphoxide, dimethyl imidazolidinone, sulpholane, N-methylpyrrolidone, dimethyl formamide, acetonitrile, acetone, 1,4-dioxane, 1,3-dioxolane, tetramethyl urea, hexamethyl phosphoramide, hexamethyl phosphorotriamide, pyridine, propionitrile, butanone, cyclohexanone, tetrahydrofuran, tetrahydropyran, 2-methyltetrahydrofuran, ethylene glycol diacetate, cyclopentylmethylether, methylethylketone, ethyl acetate, y-butyrolactone and mixtures comprising two or more thereof.

Optionally the CEL comprises a porous support.

The BPM of the present invention further comprises an anion exchange layer (AEL). An intermediate layer (IL) may be present in between the AEL and the CEL.

The AEL is preferably obtainable by curing a (second) curable composition (hereinafter referred to as the "second curable composition") comprising:
(a2) 10 to 88 wt% of a curable compound comprising a cationic group and at least two polymerisable groups;
(b2) 0 to 25wt% of a curable compound comprising at least two polymerisable groups and being free from cationic groups;
(c2) 0 to 60 wt% of a curable compound having a cationic group and one and only one polymerisable group;
(d2) 0 to 10 wt% of radical initiator; and
(e2) 0 to 55 wt% of solvent.

Preferably component (a2) is of the Formula (A) or Formula (CL) and preferably component (c2) is of Formula (B) or Formula (SM): 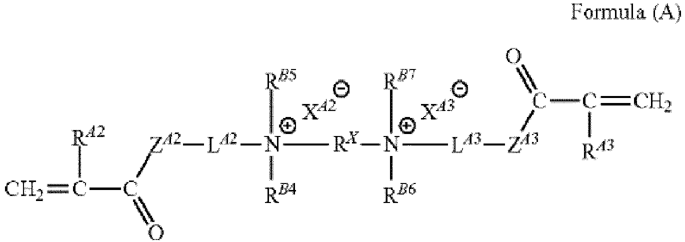 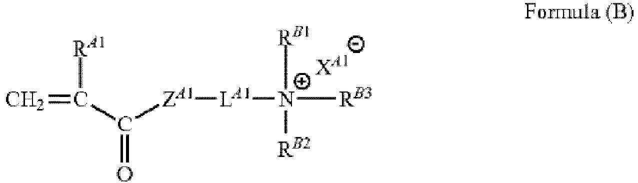 wherein in Formulae (A) and (B):
R^{A1} to R^{A3} each independently represent a hydrogen atom or an alkyl group;
R^{B1} to R^{B7} each independently represent an alkyl group or an aryl group;
Z^{A1} to Z^{A3} each independently represent -O- or -NRa-, wherein Ra represents a hydrogen atom or an alkyl group;
L^{A1} to L^{A3} each independently represent an alkylene group, an arylene group or a divalent linking group of a combination thereof;
R^{X} represents a divalent linking group, e.g. an alkylene group, an alkenylene group, an alkynylene group, an arylene group, or a combination thereof; and
X^{A1} to X^{A3} each independently represent an organic or inorganic anion, preferably a halogen ion or an aliphatic or aromatic carboxylic acid ion.

Examples of compounds of Formula (A) or (B) include:

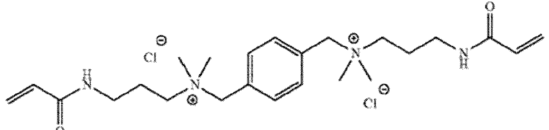

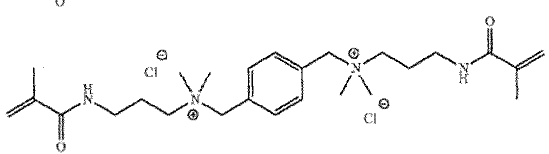

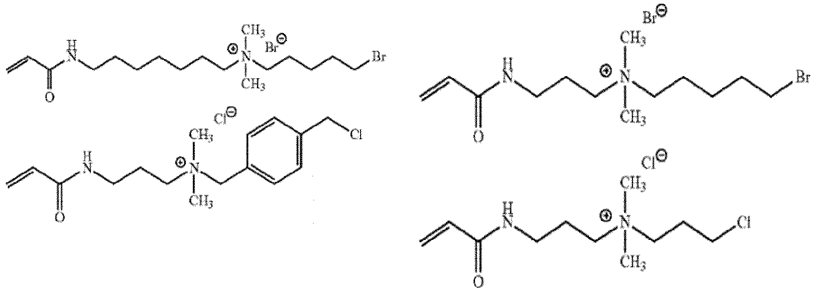

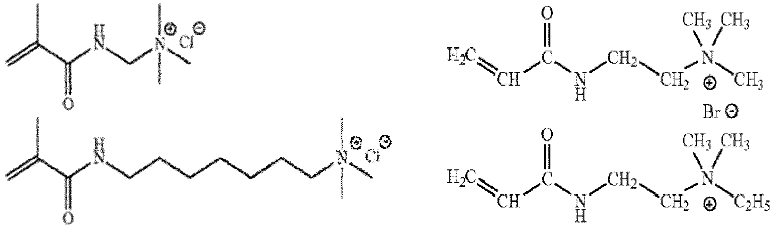

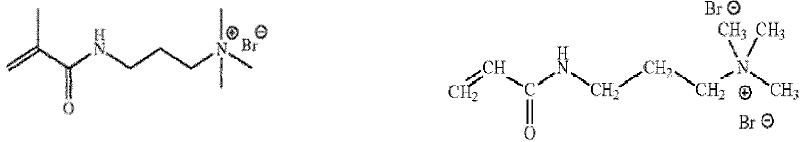

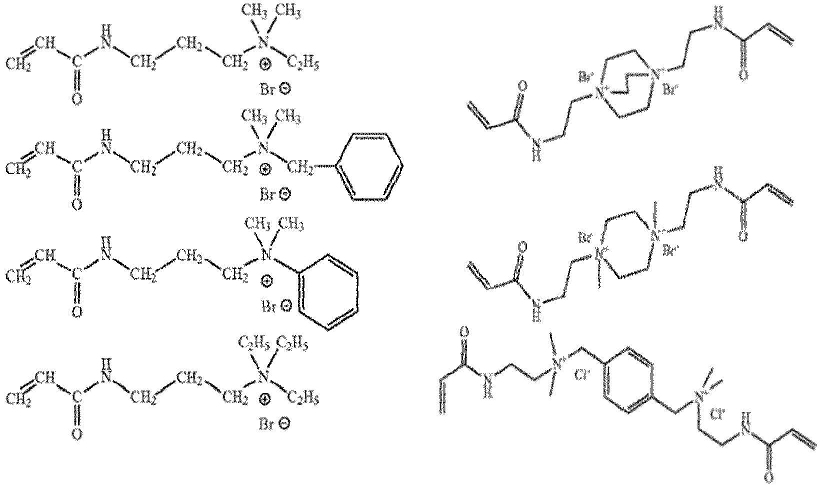

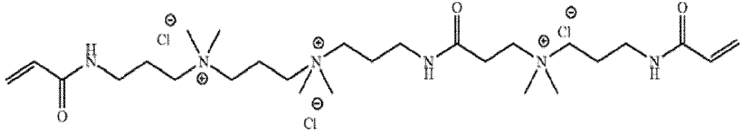

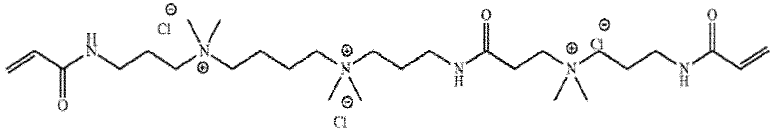

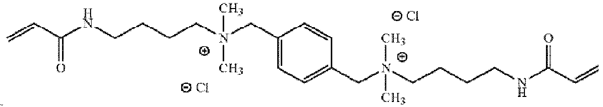

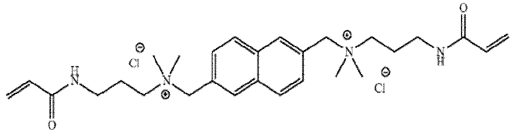

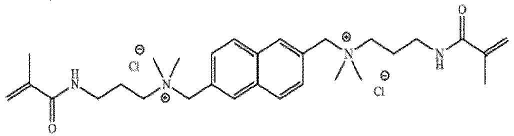

Synthesis methods can be found in e.g. US2015/0353721, US2016/0367980 and US2014/0378561. 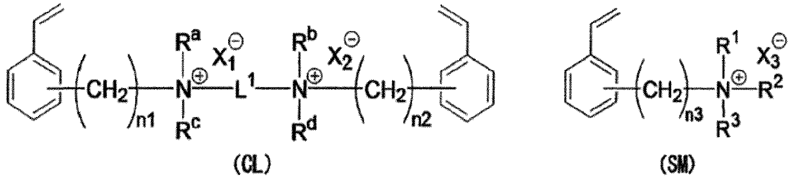 wherein in Formulae (CL) and (SM):
L¹ represents an alkylene group or an alkenylene group;
R^{a}, R^{b}, R^{c}, and R^{d} each independently represent a linear or branched alkyl group or an aryl group,
R^{a} and R^{b}, and/or R^{c} and R^{d} may form a ring by being bonded to each other;
R¹, R², and R³ each independently represent a linear or branched alkyl group or an aryl group, R¹ and R², or R¹, R² and R³ may form an aliphatic heterocycle by being bonded to each other;
n1, n2 and n3 each independently represent an integer of 1 to 10; and
X₁⁻, X₂⁻ and X₃⁻ each independently represent an organic or inorganic anion.

Examples of compounds of Formula (CL) or (SM) include:

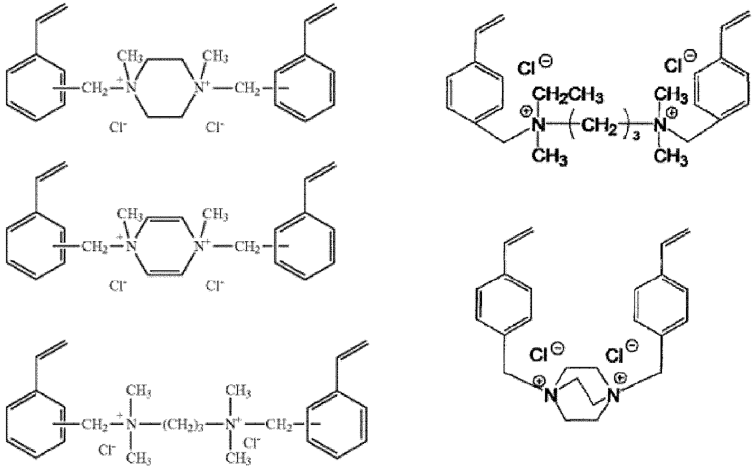

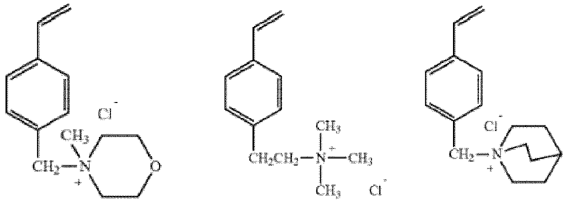

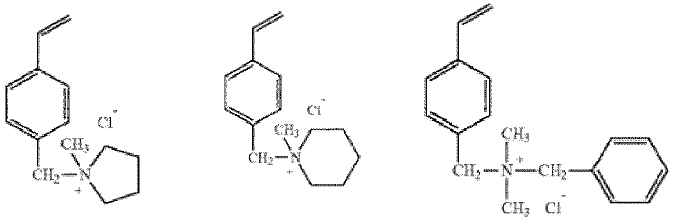

Synthesis methods can be found in EP3184558 and US2016/0001238.

Examples of compounds of Formula (SM) are:

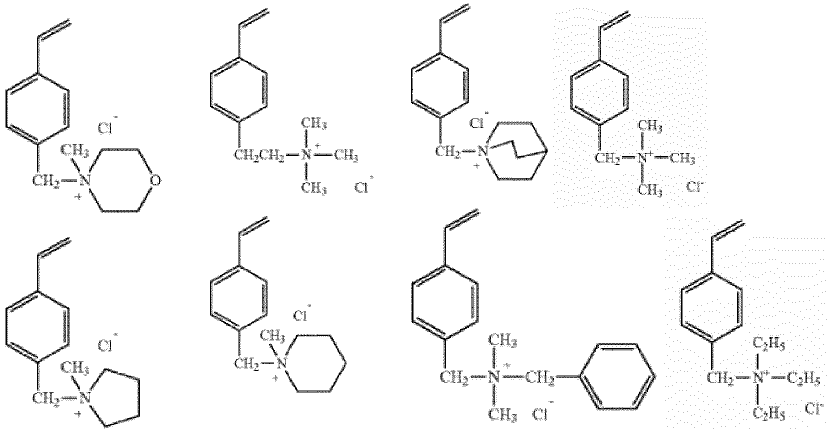

The above compounds may be prepared as described in, for example, US2016177006.

Preferably component (a2) is of Formula (CL) and preferably component (c2) is of Formula (SM):
The second curable composition preferably comprises 15 to 80wt%, especially 20 to 70wt%, of component (a2).

The second curable composition preferably comprises 0 to 40wt% of component (c2).

Component (b2) is preferably as defined above for component (b1) or (c1).

Components (d2) and (e2) are preferably as defined above for components (e1) and (f1) respectively.

Preferably the composition comprises 0 to 10 wt%, more preferably 0.001 to 5 wt%, most preferably 0.005 to 2 wt%, of component (d2).

Preferably the composition comprises 0 to 40 wt%, more preferably 10 to 40 wt%, most preferably 15 to 35 wt%, of component (e2).

Preferably the amount of components (a2) + (b2) + (c2) + (d2) + (e2) add up to 100wt%.

Optionally the AEL comprises a porous support.

The BPM according to the first aspect of the present invention preferably further comprises an intermediate layer (IL) located between the CEL and the AEL.

Preferably the intermediate layer comprises a co-continuous polymeric network of (i) a first polymer having ionic groups and a network of pores; and (ii) a second polymer having ionic groups of charge opposite to the charge of the ionic groups of the first polymer and being present in the network of pores of the first polymer.

In order to achieve the two opposite charges required for the first polymer and the second polymer, one of the first and second polymers is a cationic polymer (i.e. carries positively charged groups) and the other is an anionic polymer (i.e. carries negatively charged groups). In one embodiment the first polymer is anionic and the second polymer is cationic. In another embodiment the first polymer is cationic and the second polymer is anionic.

In a preferred embodiment the first polymer is obtainable by a process comprising phase-separation of the first polymer from a (third) curable composition used to prepare the first polymer, preferably by a process comprising polymerisation-induced phase separation, more preferably photopolymerisation-induced phase separation, of the first polymer from the third curable composition used to prepare the first polymer. In this way one may obtain the first polymer in a form which comprises a network of pores and the pores may be used to receive the second polymer (or a fourth curable composition used to prepare the second polymer) in order to make the intermediate layer and provide a co-continuous polymeric network of (i) the first polymer having ionic groups; and (ii) the second polymer having ionic groups of charge opposite to the charge of the ionic groups of the first polymer and being present within the network of pores of the first polymer. The pores in the network of pores preferably have an average pore diameter of less than 5 µm, more preferably less than 2 µm, especially less than 1 µm.

The intermediate layer preferably comprises at least two continuous intermingled polymeric domains (one domain derived from the first polymer and the other domain derived from the second polymer) having a large contact area with each other. This may be achieved by the first polymer comprising a network of pores and the second polymer being different to the first polymer (e.g. one is cationic and the other is anionic) and being present within the network of pores of the first polymer. As a result of this large contact area between the two (or more) polymers present in the intermediate layer, the amount of water molecules that are dissociated into H⁺ and OH⁻ per unit of time is increased and thereby the productivity of the BPM is also increased.

The large contact area between the first and second polymers present in the intermediate layer is preferably provided by the co-continuous network wherein the two (or more) polymeric domains derived from the first and second polymers bearing opposite charges. An advantage of the co-continuous network is that newly produced anions (e.g. OH⁻) and cations (e.g. H⁺) created at the interface between the first and second polymers (i.e. the interface of the two polymeric domains) are separated into the individual polymeric domains immediately after their formation, preventing ion recombination. In addition, the adhesion between the first and second polymers (i.e. adhesion between the first and second polymeric domains) in the intermediate layer is extremely strong as a result of the entanglement of the first and second polymers, and the large contact area between the first and second polymers. The strong adhesion between the first and second polymers prevents/reduces the so-called ballooning effect in which large, water-filled blisters can be formed at the interface between positively and the negatively charged polymers of a BPM, where OH⁻ and H⁺ might recombine (undesirably) to form water. Even if some ballooning would occur it would not affect the catalytic reaction as ballooning does not occur on the interface of the first and the second polymer, but on the interface of the AEL or the CEL with the IL. Preferably the polymeric domains are not encapsulated, not isolated, not discontinuous (e.g. compressed resin beads) and are non-fibrillar (e.g. not made by electrospinning).

In the present invention the intermediate layer preferably comprises a porous support and the first polymer is present within the porous structure of this support. Preferably the first polymer comprises a network of pores and the second polymer is present within those pores (thereby providing the co-continuous polymeric network, e.g. two polymeric domains of which one bears anionic charges and the other cationic charges).

The first polymer is preferably obtainable by curing a third curable composition comprising:
(a3) 15 to 75 wt% of a curable compound comprising at least two polymerisable groups and an ionic group or a precursor of an ionic group;
(b3) 0 to 25wt% of a curable compound comprising at least two polymerisable groups and being free from ionic groups;
(c3) 0 to 60 wt% of a curable compound having one and only one polymerisable group and an ionic group or a precursor of an ionic group;
(d3) 0 to 10 wt% of radical initiator; and
(e3) 20 to 85 wt% of solvent.

Precursors of an ionic group include amino groups (to form cationic groups), ester groups, anhydride groups and acyl chloride groups (to form anionic groups).

Examples include: C₁₋₄-alkyl amino, methyl-, ethyl- and tert-butyl-carboxylate, methyl-, ethyl- and tert-butyl-sulphonate and sulphonate chloride.

If the curable compound comprises a precursor of an ionic group, the compound may be transferred into an ionically charged compound by hydrolysis (to form an anionically charged compound) or by alkylation (to form a cationically charged quaternary ammonium group).

Components (a3) and (c3) are preferably as defined above for (a1) and (d1) or (a2) and (c2) respectively, depending on the charge of the ionic groups present in component (a3) and/or component and (c3) (when present).

Component (b3) is preferably as defined above for component (b1) or (c1), or as defined above for component (b2), depending on the charge of the ionic groups present in component (b3) when present.

Components (d3) and (e3) are preferably as defined above for components (e1) and (f1) respectively.

The amount of component (a3) is preferably 20 to 75wt%, especially 25 to 70wt%, more especially 30 to 70wt%.

The amount of component (c3) is preferably 0 to 30wt%, especially 0 to 20wt%.

The amount of component (d3) is preferably 0 to 2wt%, more preferably - for curing by UV or visible light- 0.001 to 2wt%, especially 0.005 to 0.9wt%.

The amount of component (e3) is preferably 20 to 80wt%, especially 20 to 75wt%, more especially 25 to 70wt%.

In a preferred embodiment the composition does not contain component (b3).

Preferably the amount of components (a3) + (b3) + (c3) + (d3) + (e3) add up to 100wt%.

In a preferred embodiment the ionic group in components (a3) and (c3) (when present) is a cationic group.

The second polymer is preferably obtainable by curing a fourth curable composition. In a preferred embodiment the fourth curable composition used to prepare the second polymer is identical to the first or second curable composition such that the second polymer has a charge opposite to the charge of the first polymer. For example, when the ionic groups in components of the third composition are cationic then one may use the first curable composition as the fourth composition because its ionic components comprise anionic groups. Similarly, when the ionic groups in components of the third composition are anionic then one may use the second curable composition as the fourth composition because its ionic components comprise cationic groups. In this way one may obtain a BPM in which the second polymer has an identical chemical composition to the CEL or AEL, depending on the charge of the first polymer, and has a charge opposite to the charge of the first polymer.

In another preferred embodiment the fourth curable composition used to prepare the second polymer has a different chemical composition than the first or second curable composition allowing for more freedom to optimize the intermediate layer. In this embodiment the second polymer is preferably obtainable by a process comprising curing a fourth curable composition comprising:
(a4) 10 to 88 wt% of a curable compound comprising at least two polymerisable groups and an ionic group of charge opposite to the curable compound present in the third curable composition;
(b4) 0 to 25wt% of a curable compound comprising at least two polymerisable groups and being free from ionic groups;
(c4) 0 to 60 wt% of a curable compound having one and only one polymerisable group and an ionic group of charge opposite to the curable compound present in the third curable composition;
(d4) 0 to 10 wt% of radical initiator; and
(e4) 0 to 55 wt% of solvent.

Components (a4) and (c4) are preferably as defined above for (a1) and (d1), or (a2) and (c2) respectively, depending on the charge of the ionic groups present in component (a4) and/or component and (c4) (when present).

Component (b4) is preferably as defined above for component (b1) or (c1), or as defined above for component (b2), depending on the charge of the ionic groups present in component (b4) when present.

The amount of component (a4) is preferably 10 to 70wt%, more preferably 15 to 65wt%.

The amount of component (c4) is preferably 0 to 30wt%, especially 0 to 20wt%.

Components (d4) and (e4) are preferably as defined above for components (e1) and (f1) respectively.

The amount of component (d4) is preferably 0 to 2wt%, more preferably - for curing by UV or visible light- 0.001 to 2wt%, especially 0.005 to 0.9wt%.

The amount of component (e4) is preferably 0 to 40 wt%, more preferably 10 to 40 wt%, most preferably 15 to 35 wt%.

In a preferred embodiment the composition does not contain component (b4).

Preferably the amount of components (a4) + (b4) + (c4) + (d4) + (e4) add up to 100wt%.

In a preferred embodiment the ionic group in components (a4) and (c4), when present, is an anionic group (and hence the ionic group in components (a3) and (c3) (when present) is a cationic group). In this embodiment the fourth curable composition preferably comprises a catalyst, preferably a cationically charged catalyst such as a metal ion. In another embodiment the ionic group in components (a4) and (c4), when present, is a cationic group (and hence the ionic group in components (a3) and (c3) (when present) is an anionic group).

In a preferred embodiment the intermediate layer (IL) contains a porous support.

Optionally the BPM comprises a catalyst. The catalyst or a precursor thereof may be included in one or more of the first curable composition for the CEL, the second curable composition for the AEL, the third curable composition for the first polymer and the fourth curable composition for the second polymer. Also possible is to apply the catalyst or a precursor thereof (e.g. as a post-treatment step) to the first polymer i.e. after curing the third curable composition) using, for example, (but not limited to), dipping, air knife coating, microroller coating, spraying, chemical (vapour) deposition or physical (vapour) deposition. In this embodiment the catalyst is present at the interface between the first and the second polymer and may assist with the WDR. In a preferred embodiment the intermediate layer comprises a catalyst. In another embodiment the catalyst is present in the third or fourth curable composition (depending on which curable composition comprises anionic groups).

Examples of suitable catalysts include metal salts, metal oxides, organometallic compounds, monomers, polymers or co-polymers. Examples include, but are not limited to, FeCl₃, FeCl₂, AlCl₃, MgCl₂, RuCl₃, CrCl₃, Fe(OH)₃, Sn(OH)₂, Sn(OH)₄, SnCl₂, SnCl₄, SnO, SnO₂, Al₂O₃, NiO, Zr(HPO₄)₂, MoS₂, graphene oxide, Fe-polyvinyl alcohol complexes, polyvinyl alcohol (PVA), polyethylene glycol (PEG), polyethyleneimine (PEI), polyacrylic acid (PAA), copolymer of acrylic acid and maleic anhydride (PAAMA) and hyperbranched aliphatic polyester. Any of these catalysts may be present in a range of 0.0005 to 5wt%, e.g. 0.001 wt% or 1 wt%, of the weight of the BPM.

According to a third aspect of the present invention there is provided a process for preparing a bipolar membrane (BPM) comprising an anion exchange layer (AEL), a cation exchange layer (CEL) and an intermediate layer (IL) which comprises curing of a composition according to the second aspect of the present invention.

Preferably the process comprises the following steps:
(i) providing a first, second, third and optionally a fourth curable composition as defined above;
(ii) impregnating a porous support with the third curable composition;
(iii) curing the third curable composition present within the porous support by a process comprising phase separation of a first polymer from the third curable composition, wherein the first polymer comprises ionic groups and a network of pores, thereby providing a base layer comprising the porous support and the first polymer, wherein the base layer comprises a first side and a second side opposite to the first side;
(iv) optionally contacting the first side of the base layer with the fourth curable composition such that at least a part of the fourth curable composition enters into at least a part of the pores of the first polymer;
(v) contacting the first side or the second side of the base layer with the first curable composition such that a layer of the first curable composition is provided on the first or second side of the base layer and optionally at least a part of the first curable composition enters into at least a part of the pores of the first polymer;
(vi) contacting the second side or the first side of the base layer with the second curable composition such that a layer of the second curable composition is provided on the second or first side of the base layer and optionally a part of the second curable composition enters into at least a part of the pores of the first polymer; and
(vii) curing the layers of curable composition present on each side of the base layer and present within the pores of the first polymer in any order or simultaneously to form:
   a CEL comprising a first cured composition,
   an AEL comprising a second cured composition, and
   an IL comprising a co-continuous polymeric network of (i) the first polymer; and (ii) the second polymer having ionic groups of polarity opposite to the polarity of the ionic groups of the first polymer and being present within the network of pores of the first polymer;
   wherein the IL is interposed between the CEL and the AEL.

If in the process described above the fourth curable composition comprises anionic groups in step (v) the first side of the base layer is contacted with the first curable composition. If the fourth curable composition comprises cationic groups in step (v) the second side of the base layer is contacted with the first curable composition. If step (iv) is not part of the process (the fourth curable composition is not used and the first curable composition is used as fourth curable composition) one of the first side or the second side of the base layer is contacted with the first curable composition.

In step (vi) the other of the first side or the second side of the base layer is contacted with the second curable composition. Steps (v) and (vi) may be performed in any order.

In a preferred embodiment the fourth curable composition comprises anionic groups and a catalyst.

In a preferred embodiment, the process according to the third aspect of the present invention further comprises the step (viii) of soaking the BPM in an aqueous solution of sodium chloride (e.g. NaCl solution in water at a strength of 0.1 to 1.0 moles per litre, for example 0.5M), e.g. for a period of over 5 hours (especially 6 to 24 hours, more especially 10 to 20 hours and particularly 14 to 18 hours e.g. for 16 hrs). The soaking is preferably performed at a temperature in the range 5°C to 35°C, especially 10°C to 30°C, more especially 15°C to 25°C and most preferably at room temperature (about 20°C).

In a preferred embodiment of the process according to the third aspect of the present invention, the first curable composition and the second curable composition each comprise a porous support when they are cured in step (vii).

Optionally the process according to the third aspect of the present invention further comprises the step of fully or partially hydrolysing the product of step (iii) before performing step (iv), e.g. by contacting the product of step (iii) with aqueous alkali at a temperature above 40°C during a period of time of at least 1 hour (e.g. soaking the product of step (iii) in NaOH or LiOH at a temperature in the range of 80 to 90°C for a period of 16 to 48 hours). This may be useful when one of the monomers is present in ester form. In this embodiment the third curable composition is typically anionic and the fourth curable composition is typically cationic.

In a preferred embodiment the product of step (iii) is contacted with a catalyst (preferably comprising a multivalent metal ion) before step (iv) is performed. In this way a BPM may be prepared which comprises a catalyst in layer c) at the junction between the third and fourth polymers.

In a preferred embodiment, step (ii) of the process according to the third aspect of the present invention further comprises placing the porous support impregnated with the third curable composition on a transparent foil, or between transparent foils to give a sandwich of the impregnated porous support and two foils and then squeezing the sandwich, e.g. between rollers or blades, to remove any excess of the third curable composition. After curing step (iii) the transparent foils may be removed before performing step (iv). In a further preferred embodiment curing of the third curable composition in step (iii) is performed under an inert atmosphere, e.g. under nitrogen, carbon dioxide or argon gas.

Preferably the process according to the third aspect of the present invention comprises a first curing step and a second curing step (dual curing). In a preferred embodiment the compositions are cured first by photocuring, e.g. by irradiating the compositions by ultraviolet or visible light, or by gamma or electron beam radiation, and thereby causing the curable components present in the compositions to polymerise, and then applying a second curing step. The second curing step preferably comprises thermal curing, gamma irradiation or EB irradiation whereby the second curing step preferably applies a different method than the first curing step. When gamma or electron beam irradiation is used in the first curing step preferably a dose of 60 to 120 kGy, more preferably a dose of 80 to 100 kGy is applied.

In one embodiment the process according to the third aspect of the present invention comprises curing the composition(s) in a first curing step (e.g. UV curing or electron beam (EB) curing) to form a pre-cured bipolar membrane, winding the pre-cured bipolar membrane onto a core (optionally together with an inert polymer foil) and then performing a second curing step (e.g. thermal curing). The first curing step may comprise multiple curing steps, e.g. for each layer separately or for one or more layers simultaneously. In another embodiment the process comprises curing the composition in a first curing step (e.g. UV curing) to form a pre-cured bipolar membrane, performing a second curing step (e.g. EB curing) and then winding the pre-cured bipolar membrane onto a core (optionally together with an inert polymer foil).

In a preferred embodiment the first and second curing steps are respectively selected from (i) UV curing then thermal curing; (ii) UV curing then electron beam curing; and (iii) electron beam curing then thermal curing.

The composition preferably comprises 0.05 to 5wt% of radical initiator for the first curing step. The composition optionally further comprises 0 to 5 wt% of a second radical initiator for the second curing step. When it is intended to cure the composition thermally or using light (e.g. UV or visible light) the composition preferably comprises 0.001 to 2wt%, depending on the selected radical initiator, in some embodiments 0.005 to 0.9wt%, of component (e1).

Component (e1) may comprise more than one radical initiator, e.g. a mixture of several photoinitiators (for UV curing) or a mixture of photoinitiators and thermal initiators (for UV and thermal curing). Alternatively a second curing step is performed using gamma or EB irradiation. For the second curing step by gamma or EB irradiation preferably a dose of 20 to 100 kGy is applied, more preferably a dose of 40 to 80 kGy is applied.

For the second curing step, thermal curing is preferred. The thermal curing is preferably performed at a temperature between 50 and 100°C, more preferably between 60 and 90°C. The thermal curing is preferably performed for a period between 2 and 48 hours, e.g. between 8 and 16 hours, e.g. about 10 hours. Optionally after the first curing step a polymer foil is applied to the pre-cured bipolar membrane before winding (this reduces oxygen inhibition and/or sticking of the pre-cured bipolar membrane onto itself).

Optionally the second curing step is performed under an inert atmosphere, e.g. under nitrogen, carbon dioxide or argon gas.

Preferably the process according to the third aspect of the present invention is performed in the presence of a porous support. For example, the composition(s) is (are) present in and/or on a porous support when it is cured. The porous support provides mechanical strength to the cation exchange layer resulting from curing the composition. As mentioned above a porous support may be present in the CEL, the AEL and/or the IL.

As examples of porous supports which may be used there may be mentioned woven and non-woven synthetic fabrics and extruded films. Examples include wetlaid and drylaid non-woven material, spunbond and meltblown fabrics and nanofiber webs made from, e.g. polyethylene, polypropylene, polyacrylonitrile, polyvinyl chloride, polyphenylenesulphide, polyester, polyamide, polyaryletherketones such as polyether ether ketone and copolymers thereof. Porous supports may also be porous membranes, e.g. polysulphone, polyethersulphone, polyphenylenesulphone, polyphenylenesulphide, polyimide, polyethermide, polyamide, polyamideimide, polyacrylonitrile, polycarbonate, polyacrylate, cellulose acetate, polypropylene, poly(4-methyl 1-pentene), polyinylidene fluoride, polytetrafluoroethylene, polyhexafluoropropylene and polychlorotrifluoroethylene membranes and derivatives thereof.

The porous support preferably has an average thickness of between 10 and 800µm, more preferably between 15 and 300µm, especially between 20 and 150µm, more especially between 20 and 130µm, e.g. around 60µm or around 100µm.

Preferably the porous support has a porosity of 30 and 95%. The porosity of the support may be calculated from thickness and weight (g/m²) and fiber density (g/m³) data.

The porous support, when present, may be treated to modify its surface energy, e.g. to values above 45 mN/m, preferably above 55mN/m. Suitable treatments include corona discharge treatment, plasma glow discharge treatment, flame treatment, ultraviolet light irradiation treatment, chemical treatment or the like, e.g. for the purpose of improving the wettability of and the adhesiveness of the porous support to the cation exchange layer.

Commercially available porous supports are available from a number of sources, e.g. from Freudenberg Filtration Technologies (Novatexx materials), Lydall Performance Materials, Celgard LLC, APorous Inc., SWM (Conwed Plastics, DelStar Technologies), Teijin, Hirose, Mitsubishi Paper Mills Ltd and Sefar AG.

Preferably the porous support is a porous polymeric support. Preferably the porous support is a woven or non-woven synthetic fabric or an extruded film without covalently bound ionic groups.

In a preferred process according to the third aspect of the present invention, the composition may be applied continuously to a moving (porous) support, preferably by means of a manufacturing unit comprising a composition application station, one or more irradiation source(s) for curing the composition, a membrane collecting station and a means for moving the support from the composition application station to the irradiation source(s) and to the membrane collecting station.

The composition application station may be located at an upstream position relative to the irradiation source(s) and the irradiation source(s) is/are located at an upstream position relative to the membrane collecting station.

Examples of suitable coating techniques for applying the composition to a porous support include slot die coating, slide coating, air knife coating, roller coating, screen-printing, and dipping. Depending on the used technique and the desired end specifications, it might be desirable to remove excess coating from the substrate by, for example, roll-to-roll squeeze, roll-to-blade or blade-to-roll squeeze, blade-to-blade squeeze or removal using coating bars. Curing by light is preferably done for the first curing step, preferably at a wavelength between 240 nm and 800 nm using a dose between 40 and 20,000 mJ/cm². In some cases additional drying might be needed for which temperatures between 40°C and 200°C could be employed. When gamma or EB curing is used irradiation may take place under low oxygen conditions, e.g. below 200 ppm oxygen.

The bipolar membrane of the present invention may be used for various applications, including acid and base production/purification, e.g. in a bipolar membrane electrodialysis device, CO₂ capture, energy conversion and storage, e.g. in fuel cells and redox flow batteries, wastewater treatment, pH-control, removal of SO₂ from flue gas, recycling of HF and HNO₃, and recovering of organic acids. The BPMs of the present invention have good durability in acidic and basic media, low swelling, and may be produced cheaply, quickly and efficiently.

### Examples

In the following non-limiting examples all parts and percentages are by weight unless specified otherwise.

### Performance of BPMs

A bipolar electrodialysis device (as illustrated in FIG. 1) ("the BE device") was constructed for testing the performance of the BPMs.

In the BE device an aqueous solution of NaCl (10wt%) was used as feed solution, and 0.5 M sodium sulphate was used as electrolyte. 2M HCl and 2M NaOH were used as acid solution (acid tank) and base solution (base tank) respectively.

The feed solution, acid solution and base solution (at 25°C) were supplied at a flow rate of 35L/min respectively, corresponding to a flow velocity of 5.7 cm/s. A current of 12A was applied across the electrodes of the BE device for 2 hours and during this period the voltage was recorded. The average value was taken as operating voltage.

The concentration of acid and base in the acid and base tanks of the BE device were measured by titration. The quantity of anionic impurities and cationic impurities present in the acid and base were measured using ion chromatography and Inductively Coupled Plasma (ICP) analysis respectively.

The purity of the acid and base were calculated using the following formulae. $Acid purity \left(%\right) = \left(1-\left(Δ\left[{Na}^{+}\right]/\left[{H}^{+}\right]\right)\right) x 100 % ;$ wherein:
Δ[Na⁺] is the increase in the concentration of sodium ions in the acid tank during the test in mol/L; and
[H⁺] is the hydrogen ion concentration in the acid tank after the test in mol/L. $Base purity \left(%\right) = \left(1-\left(\left(Δ\left[{Cl}^{-}\right]+Δ\left[{{SO}_{4}}^{2 -}\right]\right)/\left[{OH}^{-}\right]\right)\right) x 100 % ;$
wherein:
   Δ[Cl⁻] is the increase in concentration of chloride ions in the base tank during the test in mol/L;
   Δ[SO₄²⁻] is the increase in concentration of sulphate ions in the base tank during the test in mol/L; and
   [OH⁻] is the hydroxide ion concentration in the base tank after the test in mol/L.

### V-I curves and Leak current measurement method

The leak currents of the BPMs under test were determined from the intensity vs. voltage (V-I) curves obtained using a 6-chamber test cell equipped with a 1^{st} electrode compartment containing a platinum plate as cathode and separated from the 2^{nd} compartment by a standard cation exchange membrane (CMX from Astom). The electrode compartment was filled with 0.5 M Na₂SO₄. AMX (from Astom) was placed between the 2^{nd} and the 3^{rd} compartment and a CMX from Astom between the 4^{th} and the 5^{th} compartment. The BPM to be tested was placed between the 3^{rd} and 4^{th} compartment. A standard cation exchange membrane (CMX from Astom) was placed between the 5^{th} and the 6^{th} compartment. The 2^{nd}, 3^{rd} 4^{th} and 5^{th} compartments were filled with a NaCl solution. The 6^{th} compartment containing a platinum plate as anode formed an electrode compartment and contained 0.5 M Na₂SO₄. The solutions were pumped through the compartments of the 6-chamber test cell at a temperature of 25°C, while a constant voltage of 0.4 V was applied. The flow rate of the solution through the 3^{rd} and 4^{th} compartments was 235 mL/min, corresponding to a refreshing rate of 12 s. The BPMs were placed with the AEL side towards the anode and with the CEL side towards the cathode. The current was measured by using a Haber-Luggin capillary placed at each side of the BPM under test at a distance of 4.5 mm.

Prior to the measurement, all samples were conditioned in 0.5 M NaCl solution.

To determine the leak current, the NaCl solutions in the 2^{nd}, 3^{rd}, 4^{th} and 5^{th} compartments were all 15 wt%. A constant voltage of 0.4 V was applied. The current data were acquired every 5 seconds for a period of 300 seconds to ensure that the current had stabilized. The current leak value obtained was the average of the last 5 data points of the current (after it had reached a steady state). Preferably the leak current is as low as possible.

The performance of the bipolar membranes was characterized by means of a voltage-current relationship (V-I curve), wherein the current density was monitored as a function of the applied voltage or the other way around. To determine the full V-I profile of the bipolar membrane, the NaCl solutions in the 2^{nd}, 3^{rd} 4^{th} and 5^{th} compartments were all 10 wt%. The current was increased until a current density of 2000 A/m² was reached and the corresponding voltage was measured (representative for performance of the BPM).

### Solution stability

50 g of each of the anionic curable compositions was placed in a glass bottle and the bottle was closed tightly to prevent solvent evaporation. The composition present in the bottle was monitored visually until a phase separation occurred. Compositions which showed no phase separation after 45 minutes were deemed to be stable. If phase separation was observed within 45 minutes the composition was deemed to be unstable.

Component (a1) was prepared as described below.

### CI-SS

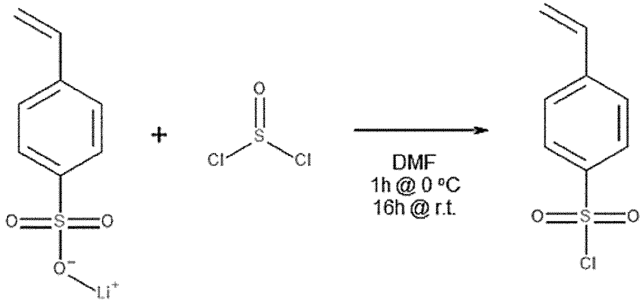

Thionyl chloride (109 mL, 178.46 g, 1.5 mol, 3 moleq) was added dropwise to a solution of 4-vinylbenzenesulphonic acid lithium salt (95.08 g, 0.500 mol, 1 moleq) and 4OH-TEMPO (50 mg, 500 ppm) in dimethylformamide (DMF) (300 mL) in a double-walled reactor that was actively cooled to 5°C. After the addition was completed, the solution was allowed to slowly heat to room temperature and was stirred for another 16 hours. Then the reaction mixture was poured into 1 liter of cold 1M KCI in a separation funnel. The bottom layer was removed and dissolved in 500 mL diethylether. This solution was washed with a 1M KCI-solution (300 mL). The organic layer was dried over sodium sulphate, filtered and concentrated in vacuo to give a yellow oil. The crude product was used without further purification in the next step. Typical yield was 89.5 g (88%). HPLC-MS purity > 98%; ¹H-NMR: <2 wt% DMF, 0% diethyl ether.

### NH2-SS

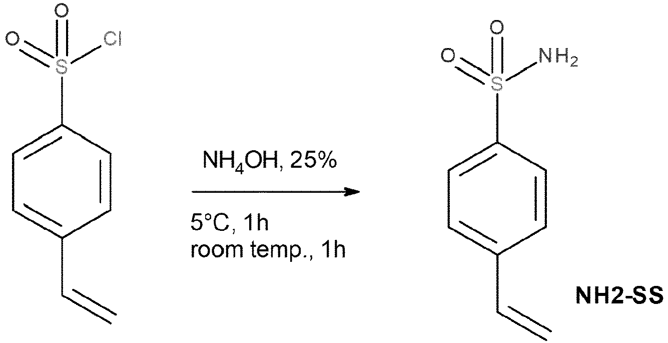

Thionyl chloride (109 mL, 178.46 g, 1.5 mol, 3 moleq) was added dropwise to a solution of 4-vinylbenzene-sulphonic acid lithium salt (95.08 g, 0.500 mol, 1 moleq) and 4OH-TEMPO (50 mg, 500 ppm) in DMF (300 mL) in a double-walled reactor that was actively cooled to 5°C. After the addition was completed, the solution was allowed to slowly heat to room temperature and was stirred for another 16 hours. Then the reaction mixture was poured into 1 liter of cold 1M KCI in a separation funnel. The bottom layer was removed and was added dropwise to a solution of ammonium hydroxide 25% in water (250 mL, 3.67 mol, 15 moleq) and 4OH-TEMPO (50 mg, 500 ppm) in a double-walled reactor that was actively cooled to 5°C. After the addition was completed, the solution was stirred for 1 hour. The solution was then allowed to heat to room temperature and was stirred for one hour. Then the reaction mixture was cooled back to 5°C and the product was filtered off and washed with 50 mL of cold water. The product was dried overnight in vacuo at 30°C and used without further purification. Typical yield was 66.8 g (73%). HPLC-MS purity > 95%.

### XL-B

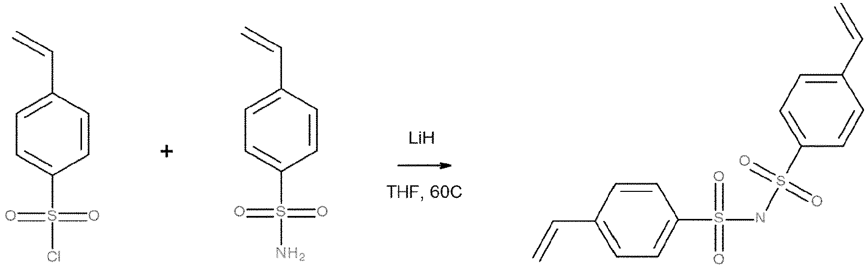

Before the synthesis, styrene sulphonamide (NH2-SS) was dried in a vacuum oven overnight (30°C, vac). To a solution of the dried benzene sulphonamide (11.12 g, 0.061 mol, 1 moleq) and 4OH-TEMPO (30 mg, 500 ppm) in tetrahydrofuran (THF) (100 mL) was added lithiumhydride (LiH) (1.06 g, 0.134 mol, 2.2 moleq) as a solid at once. The reaction mixture was stirred for 30 minutes at room temperature. Then, a solution of CI-SS (12.3 g, 0.061 mol, 1 moleq) in THF (50 mL) was added to the reaction mixture. After addition, the reaction mixture was heated to 60°C (water bath temperature). After two days, the reaction mixture was filtrated over celite to remove the excess of LiH. Celite was added and the resulting slurry was stirred for 5 minutes. Then, the celite was filtered off and washed with 100 mL ethyl acetate. The solvent was then evaporated in vacuo and the resulting white foam was washed with 500 mL diethyl ether overnight. The resulting white powder was filtered off and dried in a vacuum oven at 30°C for 16h yielding a white solid. Typical yield was 11 g (51%). HPLC-MS purity > 94%; ¹H-NMR:<1 wt% residual solvents, <5 wt% styrene sulphonate or styrene sulphonamide; ICP-OES: 21-26 g Li/kg product.
XL-A1 and XL-A2 were prepared as described in EP2979748-A1 on page 21 as Synthesis Example 1 (CL-1) and Synthesis Example 2 (CL-8) respectively.

**Table 1 Ingredients**

| Component | Component type | Supplier |
|---|---|---|
| XLB | (a1) | Benzenesulphonamide, 4-ethenyl-N-[(4-ethenylphenyl)sulphonyl]-, lithium salt |
| Krasol^{®} LBH P2000 CF | (b1) | polybutadiene polymer having an MW of 2100 g/mol and a viscosity at 25°C of 13 Pa.s from Cray Valley |
| DVB | (c1) | Divinylbenzene from Sigma-Aldrich |
| LiSS | (d1) | Styrene sulphonate, lithium salt from Tosoh Chemicals |
| XL-A1 | (a2) | 1,4-bis[(ethenylphenyl)methyl]-1,4-diazoniabicyclo[2.2.2]octane, dichloride |
| XL-A2 | (a3) | N,N,N',N'-tetramethyldiaminopropane, 1,4-bis[(4-ethenylphenyl)methyl]-, chloride |
| VTBMAC | (c2) | 4-Vinylbenzyl trimethylammonium chloride from Sigma-Aldrich |
| 4OH-TEMPO | Inhibitor | 4-hydroxy-2,2,6,6-tetramethylpiperidin-1-oxyl, from Sigma-Aldrich, 2wt% solution in water |
| V-59 | (e1) | 2,2'-azobis(2-methylbutyronitrile) from FUJIFILM Wako Chemicals |
| TPO-L | (e1), (d2), (d3) | Ethyl(2,4,6-Trimethylbenzoyl)-phenyl phosphinate from IGM Resins |
| LAP | (e1), (d3) | Phenyl-2,4,6-trimethylbenzoylphosphinate, lithium salt from Sigma-Aldrich |
| Irgacure^{®} 1173 | (d2), (d3) | 2-Hydroxy-2-methyl propiophenone from BASF |
| PW | (f1), (e2), (e3) | Deionized water |
| IPA | (f1) | 2-propanol from Sigma-Aldrich |
| SnCl₂.2H₂O | | Stannous chloride from Sigma Aldrich |
| S1 | Porous support | PE/PP nonwoven support of thickness 60µm and density 15 gsm |
| S2 | Porous support | PE/PP nonwoven support of thickness 80µm and density 28 gsm |

**Table 2 First and fourth curable compositions (anionic)**

| Component (wt%) | CC1 | CC2 | CC3 | CC4 |
|---|---|---|---|---|
| XLB | 46.46 | 56.00 | 46.46 | 51.90 |
| Krasol^{®} LBH P2000 CF | 3.58 | | 10.72 | |
| DVB | 7.14 | | | |
| LiSS | 7.92 | 8.11 | 7.92 | 7.53 |
| 4OH-TEMPO (2% in water) | 0.98 | 1.00 | 0.98 | 0.93 |
| V-59 | 0.98 | 0.61 | 0.98 | |
| Component (wt%) | CC1 | CC2 | CC3 | CC4 |
| TPO-L | 0.48 | 0.50 | 0.48 | 0.46 |
| LAP | 0.48 | 0.50 | 0.48 | 0.46 |
| PW | 27.10 | 28.29 | 27.10 | |
| IPA | 4.88 | 5.00 | 4.88 | 4.63 |
| 1N HCl in water | | | | 26.75 |
| SnCl₂.2H₂O | | | | 7.33 |
| TOTAL | 100 | 100 | 100 | 100 |
| Stability (min) | >45 | >45 | <15 | >45 |
| wt% (b)+(c) | 10.7 | 0 | 10.7 | |
| wt ratio (b)/(c) | 0.501 | na | 0.000 | |
| molar ratio (b)/(c) | 0.033 | na | 0.000 | |
| wt ratio (a)/((b)+(c)) | 4.34 | na | 4.34 | |
| molar ratio (a)/((b)+(c)) | 2.31 | na | 24.39 | |
| molar ratio (a)/(c) | 2.384 | na | 0.000 | |

| | | | | |
|---|---|---|---|---|
| CC1 to CC3 are first curable compositions and CC4 is a fourth curable composition. | | | | |

**Table 3 Second curable compositions (cationic)**

| Component (wt%) | CC5 |
|---|---|
| VTBMAC | 23 |
| XL-A1 | 46.1 |
| TEMPO (2wt% in water) | 2 |
| TPO-L | 0.45 |
| Irgacure^{®} 1173 | 0.45 |
| PW | 28 |
| Total | 100 |

**Table 4 Third curable composition (cationic)**

| Component (wt%) | CC6 |
|---|---|
| PW | 65 |
| 4OH-TEMPO (2wt% in water) | 1 |
| NaCl | 0.1 |
| XL-A2 | 32.7 |
| LAP | 0.6 |
| Irgacure^{®} 1173 | 0.48 |
| TPO-L | 0.12 |
| Total | 100 |

**Table 5 Composition of the BPM**

| | Ex1 | CEx1 | CEx2 | CEx3 |
|---|---|---|---|---|
| CEL | CC1 | CC2 | CC2 | CC3 |
| Support CEL | S1 | S1 | S2 | S1 |
| AEL | CC5 | CC5 | CC5 | CC5 |
| Support AEL | S1 | S1 | S1 | S1 |
| 4^{th} curable composition | CC4 | CC2 | CC2 | CC3 |

### Preparation of the BPMs

### Preparation of the base layer

A 80 µm thick layer of the third curable composition CC6 was applied to a transparent PET foil sheet using a Mayer bar. A porous support (S1) was applied to the layer of the third curable composition, thereby becoming impregnated with the third curable composition. A second transparent PET foil sheet was applied to the impregnated porous support to provide a sandwich of the impregnated porous support between the two transparent foils. Gently all air was squeezed out of the porous support using a roller.

The sandwich of the impregnated porous support between the two transparent foils was irradiated using a Light Hammer LH10 from Fusion UV Systems fitted with a D-bulb working at 100% intensity at a speed of 5 m/min in order to cure the third curable composition present in the porous support. After curing, the transparent PET foil was removed from the top side, and the cured product was allowed to dry in the air at room temperature for 24 hrs to give a base layer (i.e. a porous support S1 comprising the porous first polymer comprising cationic groups and a network of pores) having a first side and a second side.

### Preparation of Ex1

A 1N NaOH solution was applied to the base layer using a 4µm Mayer bar and was allowed to dry in the air at room temperature for 24 hrs after which the other PET foil was removed to give treated base layer TBL1.

A 40µm layer of fourth curable composition (CC4) was applied to a transparent PET foil sheet using a Mayer bar. Then the treated base layer TBL1, prepared as described above, was placed on top of the layer of fourth curable composition with the first side of the TBL1 contacting the fourth curable composition whereupon all of the fourth curable composition entered into the pores of the first polymer (inside TBL1). This gave a base layer impregnated with the fourth curable composition.

An 80 µm thick layer of the second curable composition CC5 was applied to the second side of the impregnated base layer using a Mayer bar and porous support S1 was applied to the layer of second curable composition. After 5 seconds excess second curable composition was removed using a 4 µm Mayer bar.

The resulting product was irradiated using a Light Hammer LH10 from Fusion UV Systems fitted with a D-bulb working at 50% intensity at a speed of 5 m/min in order to cure the second and fourth curable composition to give a laminate of AEL and Intermediate layer.

The PET foil was removed and the laminate was placed onto an aluminum plate with the AEL layer facing the plate. To the side opposite to the AEL was applied an 80µm thick layer of first curable composition (CC1) using a Mayer bar after which a porous support S1 was applied to the layer of first curable composition. After 5 seconds excess first curable composition was removed using a 4 µm Mayer bar. The resulting product was irradiated using a Light Hammer LH10 from Fusion UV Systems fitted with a D-bulb working at 50% intensity at a speed of 5 m/min in order to cure the first curable composition to give a pre-cured BPM.

A transparent PET foil sheet was applied to the newly UV cured layer of first curable composition and gently all air was squeezed out between the pre-cured BPM and the transparent foil using a roller.

A second curing step was performed by placing the pre-cured BPM, packed in a sealed plastic bag, in an oven set at 90°C for 15 hours. Finally, the PET foil was removed to give the BPM comprising the CEL, the AEL and the intermediate layer located between the CEL and the AEL.

### Preparation of CEx1-CEx3

Catalyst solution CS1 was prepared by mixing the following ingredients:

**Table 6: Catalyst solution**

| Materials (wt%) | CS1 |
|---|---|
| PW | 78.65 |
| SnCl₂.2H₂O | 1.35 |
| 0.05 N HCl | 20 |
| Total | 100 |

The base layer comprising the porous first polymer was dipped in catalyst solution CS1 and allowed to dry at room temperature. Subsequently the base layer was dipped in a 0.12N NaOH solution to precipitate the catalyst and was then allowed to dry at room temperature to give catalytically active base layer CBL1.

The BPMs of Comparative Examples CEx.1 to CEx.3 were prepared from the catalytically active base layer CBL1 and the porous supports, first and second curable compositions indicated in Table 5

The BPMs of Comparative Examples CEx.1 to CEx.3 described in Table 5 above were prepared as follows: The first curable composition (for the CEL) indicated in Table 5 above was applied to a transparent PET foil using a 80 µm Mayer bar for porous support S1 and a 100 µm Mayer bar for porous support S2. The porous support for the CEL indicated in Table 5 above was placed on the layer of first curable composition. Then the functionalized base layer CBL1 prepared as described above, was placed on top of the layer of first curable composition with the first side of the CBL1 contacting the first curable composition whereupon at least a part of the first curable composition entered into the pores of the first polymer (inside CBL1). This gave a base layer impregnated with the first curable composition and provided a layer of the first curable composition on the first side of the base layer.

The base layer impregnated with the first curable composition and having a layer of the first composition on its first side was irradiated on the second side thereof (i.e. the side without the first curable composition) using a Light Hammer LH10 from Fusion UV Systems fitted with a D-bulb working at 50% intensity at a speed of 5 m/min. The resultant cured film was a laminate of the CEL and the intermediate layer in which the pores of the first polymer were filled with the cured first curable composition.

A 100 µm layer of the second curable composition (for the AEL) was applied to the second side of the laminate of CEL and intermediate layer using a Mayer bar and a second porous support (for the AEL, as specified in Table 5) was applied to the layer of the second curable composition. After 5 seconds excess second curable composition was removed using a 4 µm Mayer bar.

The resulting product was irradiated on both sides using a Light Hammer LH10 from Fusion UV Systems fitted with a D-bulb working at 50% intensity at a speed of 5 m/min in order to cure the second curable composition. A second curing step was performed by placing the BPM sample, packed in a sealed plastic bag, in an oven set at 90°C for 15 hours. Finally, the PET foil was removed to give the BPM comprising the CEL, the AEL and the intermediate layer located between the CEL and the AEL.

**Table 7 Results**

| | Ex1 | CEx1 | CEx2 | CEx3 |
|---|---|---|---|---|
| Leak current at 0.4V (A/m²) | 21 | 76 | 23 | 22 |
| Voltage at 2000 A/m² (V) | 1.73 | 1.96 | 2.69 | 1.74 |
| Acid purity (%) | 99.3 | 99.4 | 99.1 | 99.3 |
| Base purity (%) | 98.9 | 95.6 | 98.8 | 99.0 |

CEx1 shows higher current leak at 0.4 V, compared to example 1 and lower base purity and uses slightly more energy at 2000 A/m².

CEx2 (Thicker CEL) does show lower current leak at 0.4V, but it uses a higher voltage (more energy) to reach 2000 A/m² and the thicker layer is more costly.

CEx3 (only PBD) CEL coating solution stability was not good.

## Claims

1. A bipolar membrane comprising an anion exchange layer and a cation exchange layer, wherein the cation exchange layer is obtainable by curing a composition comprising:
(a) a first crosslinking agent comprising an anionic group and at least two polymerisable groups;
(b) a second crosslinking agent comprising at least 5 vinyl groups and being free from ionic groups;
(c) a third crosslinking agent comprising 2, 3 or 4 polymerisable groups and being free from ionic groups.

2. The bipolar membrane according to claim 1 wherein the first crosslinking agent comprises a bissulphonylimide group as anionic group.

3. The bipolar membrane according to any one of the preceding claims wherein the polymerisable groups of the first crosslinking agent are vinyl groups.

4. The bipolar membrane according to any one of the preceding claims wherein the first crosslinking agent comprises a C₆-C₁₀-aryl group, preferably a phenyl group.

5. The bipolar membrane according to any one of the preceding claims wherein the second crosslinking agent has a molecular weight of between 1000 and 5000 Da.

6. The bipolar membrane according to any one of the preceding claims wherein the second crosslinking agent comprises at least 8 vinyl groups.

7. The bipolar membrane according to any one of the preceding claims wherein the second crosslinking agent is a curable compound of Formula (III):
R'-Aₙ-Bₘ-C_{q}-R' Formula (III)
wherein:
A is [CH₂CH=CHCH₂];
B is [CH₂CH(CH=CH₂)];
C is [CH₂CH(C₆H₅)];
n has a value of from 5 to 80% of the sum of (n+m+q);
m has a value of from 20 to 95% of the sum of (n+m+q);
q has a value of from 0 to 30% of the sum of (n+m+q); and
each R' independently is H or OH;
provided that the curable compound of Formula (III) comprises at least 5 vinyl groups and is free from ionic groups.

8. The bipolar membrane according to any one of the preceding claims wherein the third crosslinking agent has a molecular weight of less than 500 Da.

9. The bipolar membrane according to any one of the preceding claims wherein the third crosslinking agent has a melting point below 50°C.

10. The bipolar membrane according to any one of the preceding claims wherein the polymerisable groups of the third crosslinking agent are selected from vinyl groups and thiol groups.

11. The bipolar membrane according to any one of the preceding claims wherein the weight ratio of second and third crosslinking agent is 0.2 and 5, and wherein the weight ratio of first and the sum of the second and third crosslinking agent is between 3 and 25.

12. The bipolar membrane according to any one of the preceding claims wherein the molar ratio of second and third crosslinking agent is 0.01 and 0.5, and wherein the molar ratio of first and the sum of the second and third crosslinking agent is between 2 and 12.

13. A process for preparing a bipolar membrane comprising curing a composition to form the BPM, wherein the composition is as defined in any one of claims 1 to 12.

14. A bipolar electrodialysis device comprising the bipolar membrane according to claims 1 to 12.

15. Use of a bipolar membrane according to claims 1 to 12 for the generation of acids and bases, CO₂ capture, energy conversion and storage, wastewater treatment, pH-control, removal of SO₂ from flue gas, recycling of HF and HNO₃, and recovering of organic acids.

## Patentansprüche

1. Bipolare Membran, umfassend eine Anionenaustauschschicht und eine Kationenaustauschschicht, wobei die Kationenaustauschschicht durch Härten einer Zusammensetzung erlangbar ist, umfassend:
(a) ein erstes Vernetzungsmittel, umfassend eine anionische Gruppe und mindestens zwei polymerisierbare Gruppen;
(b) ein zweites Vernetzungsmittel, umfassend mindestens 5 Vinylgruppen und das frei von ionischen Gruppen ist;
(c) ein drittes Vernetzungsmittel, umfassend 2, 3 oder 4 polymerisierbare Gruppen und das frei von ionischen Gruppen ist.

2. Bipolare Membran nach Anspruch 1, wobei das erste Vernetzungsmittel eine Bissulfonylimidgruppe als anionische Gruppe umfasst.

3. Bipolare Membran nach einem der vorhergehenden Ansprüche, wobei die polymerisierbaren Gruppen des ersten Vernetzungsmittels Vinylgruppen sind.

4. Bipolare Membran nach einem der vorhergehenden Ansprüche, wobei das erste Vernetzungsmittel eine C₆-C₁₀-Arylgruppe, vorzugsweise eine Phenylgruppe, umfasst.

5. Bipolare Membran nach einem der vorhergehenden Ansprüche, wobei das zweite Vernetzungsmittel ein Molekulargewicht von zwischen 1000 und 5000 Da aufweist.

6. Bipolare Membran nach einem der vorhergehenden Ansprüche, wobei das zweite Vernetzungsmittel mindestens 8 Vinylgruppen umfasst.

7. Bipolare Membran nach einem der vorhergehenden Ansprüche, wobei das zweite Vernetzungsmittel eine härtbare Verbindung von Formel (III) ist:
R'-Aₙ-Bₘ-C_{q}-R' Formel (III)
wobei:
A [CH₂CH=CHCH₂] ist;
B [CH₂CH(CH=CH₂)] ist;
C [CH₂CH(C₆H₅)] ist;
n einen Wert von 5 bis 80 % der Summe von (n+m+q) aufweist;
m einen Wert von 20 bis 95 % der Summe von (n+m+q) aufweist;
q einen Wert von 0 bis 30 % der Summe von (n+m+q) aufweist; und
jedes R' unabhängig H oder OH ist;
mit der Maßgabe, dass die härtbare Verbindung von Formel (III) mindestens 5 Vinylgruppen umfasst und frei von ionischen Gruppen ist.

8. Bipolare Membran nach einem der vorhergehenden Ansprüche, wobei das dritte Vernetzungsmittel ein Molekulargewicht von weniger als 500 Da aufweist.

9. Bipolare Membran nach einem der vorhergehenden Ansprüche, wobei das dritte Vernetzungsmittel einen Schmelzpunkt unter 50 °C aufweist.

10. Bipolare Membran nach einem der vorhergehenden Ansprüche, wobei die polymerisierbaren Gruppen des dritten Vernetzungsmittels ausgewählt sind aus Vinylgruppen und Thiolgruppen.

11. Bipolare Membran nach einem der vorhergehenden Ansprüche, wobei das Gewichtsverhältnis von zweitem und drittem Vernetzungsmittel 0,2 und 5 ist und wobei das Gewichtsverhältnis von erstem und der Summe von zweitem und drittem Vernetzungsmittel zwischen 3 und 25 ist.

12. Bipolare Membran nach einem der vorhergehenden Ansprüche, wobei das molare Verhältnis von zweitem und drittem Vernetzungsmittel 0,01 und 0,5 ist und wobei das molare Verhältnis von erstem und der Summe aus zweitem und drittem Vernetzungsmittel zwischen 2 und 12 ist.

13. Verfahren zum Herstellen einer bipolaren Membran, umfassend ein Härten einer Zusammensetzung, um die BPM zu bilden, wobei die Zusammensetzung wie definiert in einem der Ansprüche 1 bis 12 ist.

14. Bipolare Elektrodialysevorrichtung, umfassend die bipolare Membran nach einem der Ansprüche 1 bis 12.

15. Verwendung einer bipolaren Membran nach einem der Ansprüche 1 bis 12 zur Erzeugung von Säuren und Basen, CO₂-Abscheidung, Energieumwandlung und -speicherung, Abwasserbehandlung, pH-Kontrolle, Entfernung von SO₂ aus Rauchgas, zum Recycling von HF und HNO₃ und zur Rückgewinnung von organischen Säuren.

## Revendications

1. Membrane bipolaire comprenant une couche échangeuse d'anions et une couche échangeuse de cations, dans laquelle la couche échangeuse de cations peut être obtenue par durcissement d'une composition comprenant :
(a) un premier agent de réticulation comprenant un groupe anionique et au moins deux groupes polymérisables ;
(b) un deuxième agent de réticulation comprenant au moins 5 groupes vinyle et étant exempt de groupes ioniques ;
(c) un troisième agent de réticulation comprenant 2, 3 ou 4 groupes polymérisables et étant exempt de groupes ioniques.

2. Membrane bipolaire selon la revendication 1, dans laquelle le premier agent de réticulation comprend un groupe bissulfonylimide en tant que groupe anionique.

3. Membrane bipolaire selon l'une quelconque des revendications précédentes, dans laquelle les groupes polymérisables du premier agent de réticulation sont des groupes vinyle.

4. Membrane bipolaire selon l'une quelconque des revendications précédentes, dans laquelle le premier agent de réticulation comprend un groupe aryle en C₆-C₁₀, de préférence un groupe phényle.

5. Membrane bipolaire selon l'une quelconque des revendications précédentes, dans laquelle le deuxième agent de réticulation a un poids moléculaire compris entre 1000 et 5000 Da.

6. Membrane bipolaire selon l'une quelconque des revendications précédentes, dans laquelle le deuxième agent de réticulation comprend au moins 8 groupes vinyle.

7. Membrane bipolaire selon l'une quelconque des revendications précédentes, dans laquelle le deuxième agent de réticulation est un composé durcissable de Formule (III) :
R'-Aₙ-Bₘ-C_{q}-R' Formule (III)
où :
A est [CH₂CH=CHCH₂] ;
B est [CH₂CH(CH=CH₂)] ;
C est [CH₂CH(C₆H₅)] ;
n a une valeur de 5 à 80 % de la somme de (n+m+q) ;
m a une valeur de 20 à 95 % de la somme de (n+m+q) ;
q a une valeur de 0 à 30 % de la somme de (n+m+q) ; et
chaque R' est indépendamment H ou OH ;
à condition que le composé durcissable de Formule (III) comprenne au moins 5 groupes vinyle et soit exempt de groupes ioniques.

8. Membrane bipolaire selon l'une quelconque des revendications précédentes, dans laquelle le troisième agent de réticulation a un poids moléculaire inférieur à 500 Da.

9. Membrane bipolaire selon l'une quelconque des revendications précédentes, dans laquelle le troisième agent de réticulation a un point de fusion inférieur à 50 °C.

10. Membrane bipolaire selon l'une quelconque des revendications précédentes, dans laquelle les groupes polymérisables du troisième agent de réticulation sont choisis parmi des groupes vinyle et des groupes thiol.

11. Membrane bipolaire selon l'une quelconque des revendications précédentes, dans laquelle le rapport pondéral du deuxième et du troisième agent de réticulation est compris entre 0,2 et 5, et dans laquelle le rapport pondéral du premier et de la somme du deuxième et du troisième agent de réticulation est compris entre 3 et 25.

12. Membrane bipolaire selon l'une quelconque des revendications précédentes, dans laquelle le rapport molaire du deuxième et du troisième agent de réticulation est compris entre 0,01 et 0,5, et dans laquelle le rapport molaire du premier et de la somme du deuxième et du troisième agent de réticulation est compris entre 2 et 12.

13. Processus permettant la préparation d'une membrane bipolaire comprenant le durcissement d'une composition pour former la BPM, dans lequel la composition est telle que définie dans l'une quelconque des revendications 1 à 12.

14. Dispositif d'électrodialyse bipolaire comprenant la membrane bipolaire selon les revendications 1 à 12.

15. Utilisation d'une membrane bipolaire selon les revendications 1 à 12 pour la génération d'acides et de bases, la capture de CO₂, la conversion et le stockage d'énergie, le traitement des eaux usées, le contrôle du pH, l'élimination de SO₂ des gaz de carneau, le recyclage de HF et de HNO₃ et la récupération d'acides organiques.
